# EUROPEAN PATENT APPLICATION

(11) **EP 4 385 647 A1**
(43) Date of publication of application: **19.06.2024**
(21) Application number: 23203016.3
(22) Date of filing: 11.10.2023
(51) Int. Cl.: B22F 10/38, B22F 10/36, B22F 10/366, B29C 64/393, B33Y 50/02

(54) **METHODS OF ADDITIVELY MANUFACTURING A MANUFACTURED COMPONENT, ADDITIVE MANUFACTURING SYSTEMS THAT PERFORM THE METHODS, AND STORAGE MEDIA THAT DIRECTS ADDITIVE MANUFACTURING SYSTEMS TO PERFORM THE METHODS**

(30) Priority: 13.12.2022 US 202263432351 P; 25.05.2023 US 202318323791
(71) Applicant: The Boeing Company, Arlington, VA 22202 (US)
(72) Inventor: Henshaw, Dana A., Arlington, 22202 (US); Chapman, Eric M., Arlington, 22202 (US)
(74) Representative: Witte, Weller & Partner Patentanwälte mbB

(57) **Abstract**

Methods of manufacturing a manufactured component, additive manufacturing systems that perform the methods, and storage media that directs additive manufacturing systems to perform the methods. The methods include supplying a feedstock material along a scan path. The methods also include delivering, to an addition location, an amount of energy sufficient to form a melt pool of the feedstock material at the addition location. The methods further include, during the delivering the amount of energy, moving the addition location along the scan path to move the melt pool along the scan path and define a consolidated material track from the feedstock material. The methods also include determining that the melt pool is within a threshold proximity of a merge region and adjusting a process parameter value of the additive manufacturing system from a process parameter pre-merge-region value to a process parameter post-merge-region value that differs from the process parameter pre-merge-region value.

## Description

### FIELD

The present disclosure relates generally to methods of additively manufacturing a manufactured component, to additive manufacturing systems that perform the methods, and to storage media that directs additive manufacturing systems to perform the methods.

### BACKGROUND

Additive manufacturing processes generally utilize a form of energy input to consolidate a feedstock material into a plurality of consolidated material tracks that defines a manufactured component. In such additive manufacturing processes, a shape of an individual consolidated material track may vary with position along a length of the individual consolidated material track, such as may be caused by initiation and/or termination of the individual consolidated material track. This may cause imperfections within the manufactured component and/or within an outer surface of the manufactured component. The shape of the individual consolidated material track additionally or alternatively may vary with a shape of the manufactured component, with merge regions of the manufactured component causing unique changes to the shape of the individual consolidated material track. It may be desirable to produce a greater uniformity within the individual consolidated material track, between adjacent consolidated material tracks, and/or among the plurality of consolidated material tracks. Thus, there exists a need for improved methods of manufacturing a manufactured component, for improved additive manufacturing systems that perform the methods, and/or for improved storage media that directs additive manufacturing systems to perform the methods.

### SUMMARY

Methods of manufacturing a manufactured component, additive manufacturing systems that perform the methods, and storage media that directs additive manufacturing systems to perform the methods are disclosed herein. The methods include supplying a feedstock material along a scan path of the additive manufacturing system. The methods also include delivering, from an energy source of the additive manufacturing system and to an addition location along the scan path, an amount of energy sufficient to form a melt pool of the feedstock material at the addition location. The methods further include, during the delivering the amount of energy, moving the addition location along the scan path to move the melt pool along the scan path and define a consolidated material track from the feedstock material. The methods also include determining that the melt pool is within a threshold proximity of a merge region of the manufactured component. The methods further include adjusting a process parameter value of the additive manufacturing system from a process parameter pre-merge-region value to a process parameter post-merge-region value that differs from the process parameter pre-merge-region value. The adjusting is responsive to the determining.

### BRIEF DESCRIPTION OF THE DRAWINGS

Fig. 1 is a schematic illustration of examples of additive manufacturing systems, according to the present disclosure.
Fig. 2 is a flowchart depicting examples of methods of additively manufacturing a manufactured component utilizing an additive manufacturing system, according to the present disclosure.
Fig. 3 is an image illustrating an example of a manufactured component formed utilizing a prior art additive manufacturing process.
Fig. 4 is a comparison between an example of the prior art additive manufacturing process and an example of the methods of Fig. 2.
Fig. 5 is a flowchart depicting examples of methods of additively manufacturing a manufactured component utilizing an additive manufacturing system, according to the present disclosure.
Fig. 6 is an illustration of an example of a consolidated material track formed utilizing a prior art additive manufacturing process.
Fig. 7 is an illustration of an example of a pair of adjacent consolidated material tracks formed utilizing the prior art additive manufacturing process of Fig. 6.
Fig. 8 is an illustration of an example of a consolidated material track formed utilizing the methods of Fig. 5.
Fig. 9 is another illustration of an example of a consolidated material track formed utilizing the methods of Fig. 5.
Fig. 10 is an illustration of an example of a pair of adjacent consolidated material tracks formed utilizing the methods of Fig. 5.
Fig. 11 is an illustration of an example of a plurality of adjacent consolidated material tracks formed utilizing the methods of Fig. 5.
Fig. 12 is a flowchart depicting examples of methods of additively manufacturing a manufactured component utilizing an additive manufacturing system, according to the present disclosure.
Fig. 13 is an example of a manufactured component that may be formed utilizing the methods of Fig. 12.
Fig. 14 is an example of cross-sectional views of the manufactured component of Fig. 13.
Fig. 15 is an example of scan paths that may be utilized with the methods of Fig. 12.

### DESCRIPTION

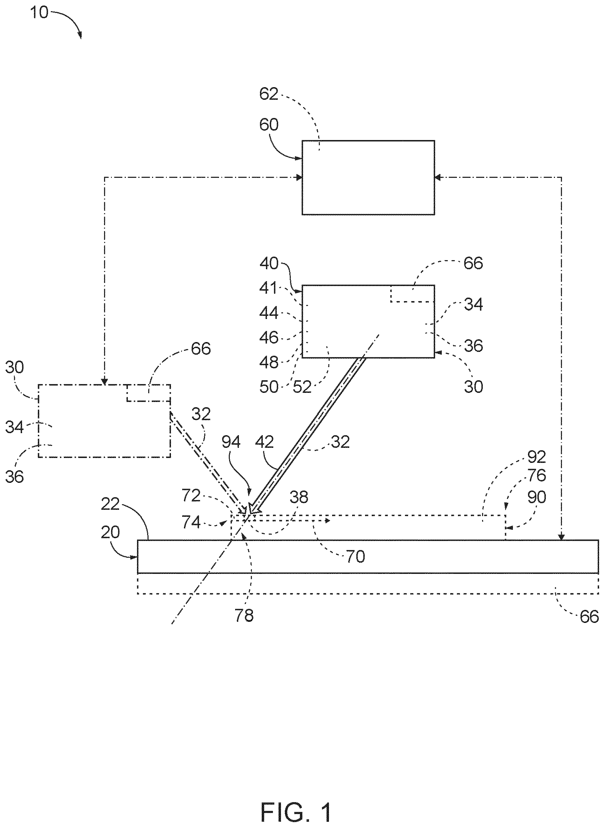

Figs. 1, 4-5, and 8-15 provide illustrative, non-exclusive examples of additive manufacturing systems 10 and/or of methods 100, 200, and 300, according to the present disclosure. Elements that serve a similar, or at least substantially similar, purpose are labeled with like numbers in each of Figs. 1, 4-5, and 8-15, and these elements may not be discussed in detail herein with reference to each of Figs. 1, 4-5, and 8-15. Similarly, all elements may not be labeled in each of Figs. 1, 4-5, and 8-15, but reference numerals associated therewith may be utilized herein for consistency. Elements, components, and/or features that are discussed herein with reference to one or more of Figs. 1, 4-5, and 8-15 may be included in and/or utilized with any of Figs. 1, 4-5, and 8-15 without departing from the scope of the present disclosure.

In general, elements that are likely to be included in a given (i.e., a particular) embodiment are illustrated in solid lines, while elements that are optional to a given embodiment are illustrated in dashed lines. However, elements that are shown in solid lines are not essential to all embodiments, and an element shown in solid lines may be omitted from a particular embodiment without departing from the scope of the present disclosure.

Fig. 1 is a schematic illustration of examples of additive manufacturing systems 10, according to the present disclosure. Additive manufacturing systems 10 may be configured to additively manufacture a manufactured component 90. As illustrated in Fig. 1, additive manufacturing systems 10 include a support platform 20, a feedstock supply system 30, an energy source 40, and a controller 60. Support platform 20 may be configured to support manufactured component 90 during additive manufacture of the manufactured component. Stated differently, support platform 20 may be configured to support manufactured component 90 during an additive manufacturing process that manufactures manufactured component 90. Examples of support platform 20 include a build plate and/or another structure that is configured to provide physical support for manufactured component 90. In some examples, support platform 20 may include and/or define a support surface 22 upon which manufactured component 90 may be supported, formed, and/or defined during the additive manufacturing process.

Feedstock supply system 30 may be configured to supply a feedstock material 32 to an addition location 94 of manufactured component 90. Examples of feedstock supply system 30 include a powder supply system 34, which is configured to supply feedstock material 32 in the form of a feedstock material powder, and/or a filament supply system 36, which is configured to supply feedstock material 32 in the form of a feedstock material filament.

Energy source 40 may be configured to deliver an amount of energy 42 to addition location 94. Examples of energy source 40 include an electrical power source 44, a source of electromagnetic radiation 46, a laser beam source 48, an electron beam source 50, and/or a heat source 52. In some examples of additive manufacturing systems 10, and as illustrated in dashed lines in Fig. 1, energy source 40 may be configured to provide amount of energy 42 to addition location 94 in and/or within feedstock material 32. Examples of such additive manufacturing systems 10 include wire feed directed energy deposition, fused deposition modeling, wire arc additive manufacturing, directed energy deposition, Joule printing, and/or powder feed directed energy deposition. In some examples of additive manufacturing systems 10, and as illustrated in dash-dot lines in Fig. 1, energy source 40 may be configured to provide amount of energy 42 to addition location 94 separately from feedstock material 32. Examples of such additive manufacturing systems 10 include powder bed fusion processes, such as laser powder bed fusion and/or electron beam powder bed fusion. In such examples, energy source 40 also may be referred to herein as and/or may include an energy delivery mechanism 41.

As illustrated in dashed lines in Fig. 1, systems 10 may include an actuation assembly 66. Actuation assembly 66, when present, may be adapted, configured, designed, and/or constructed to move support platform 20, to move at least one component of feedstock supply system 30, and/or to move at least one component of energy source 40, such as to permit and/or to facilitate motion of addition location 94 relative to support surface 22 of support platform 20. As an example, actuation assembly 66 may be associated with support platform 20 and/or may be configured to move support platform 20 relative to both feedstock supply system 30 and energy source 40. As another example, actuation assembly 66 may be associated with feedstock supply system 30 and/or may be configured to cause feedstock supply system 30 to vary a location at which feedstock material 32 approaches and/or contacts a previously formed portion 92 of manufactured component 90. As yet another example, actuation assembly 66 may be associated with energy source 40 and/or may be configured to cause energy source 40 to vary a location at which amount of energy 42 approaches and/or is incident upon previously formed portion 92. Examples of actuation assembly 66 include any suitable electric actuator, mechanical actuator, hydraulic actuator, pneumatic actuator, linear actuator, rotary actuator, servo motor, stepper motor, rack and pinion assembly lead screw assembly, ball screw assembly, and/or piezoelectric actuator.

Controller 60 is programmed to control operation of at least one other component of additive manufacturing system 10. This may include controlling the operation of the at least one other component according to and/or by performing any suitable step and/or steps of methods 100, 200, and/or 300, which are discussed in more detail herein. Controller 60 may include and/or be any suitable structure, device, and/or devices that may be adapted, configured, designed, constructed, and/or programmed to perform the functions discussed herein. As examples, controller 60 may include one or more of an electronic controller, a dedicated controller, a special-purpose controller, a personal computer, a special-purpose computer, a display device, a logic device, a memory device, and/or a memory device having computer-readable storage media.

The computer-readable storage media, when present, also may be referred to herein as non-transitory computer readable storage media 62. Non-transitory computer readable storage media 62 may include, define, house, and/or store computer-executable instructions, programs, and/or code; and these computer-executable instructions may direct additive manufacturing systems 10 and/or controller 60 thereof to perform any suitable portion, or subset, of methods 100, 200, and/or 300. Examples of such non-transitory computer-readable storage media include CD-ROMs, disks, hard drives, flash memory, etc. As used herein, storage, or memory, devices and/or media having computer-executable instructions, as well as computer-implemented methods and other methods according to the present disclosure, are considered to be within the scope of subject matter deemed patentable in accordance with Section 101 of Title 35 of the United States Code.

During operation of additive manufacturing systems 10, energy source 40 may provide amount of energy 42 to addition location 94. Concurrently and/or previously, depending upon the specific additive manufacturing process that is utilized, feedstock supply system 30 may provide feedstock material 32 to addition location 94. Amount of energy 42 may be absorbed by feedstock material 32 at addition location 94, which may soften and/or melt feedstock material 32, forming a melt pool 38 at addition location 94. This process may be repeated, with amount of energy 42 being supplied at addition locations 94 where manufactured component 90 is to be formed, or where feedstock material 32 is to be added to previously formed portion 92 of manufactured component 90, to form, define, and/or complete manufactured component 90. As an example, addition location 94 may be moved along a scan path 70 to define a consolidated material track 72 along the scan path and/or from feedstock material 32. A plurality of adjacent consolidated material tracks 72 may form and/or define manufactured component 90.

Additive manufacturing systems 10, according to the present disclosure, may be configured to form manufactured components 90 that are more uniform, that include fewer inclusions, and/or that have a reduced surface roughness when compared to conventional additive manufacturing systems.

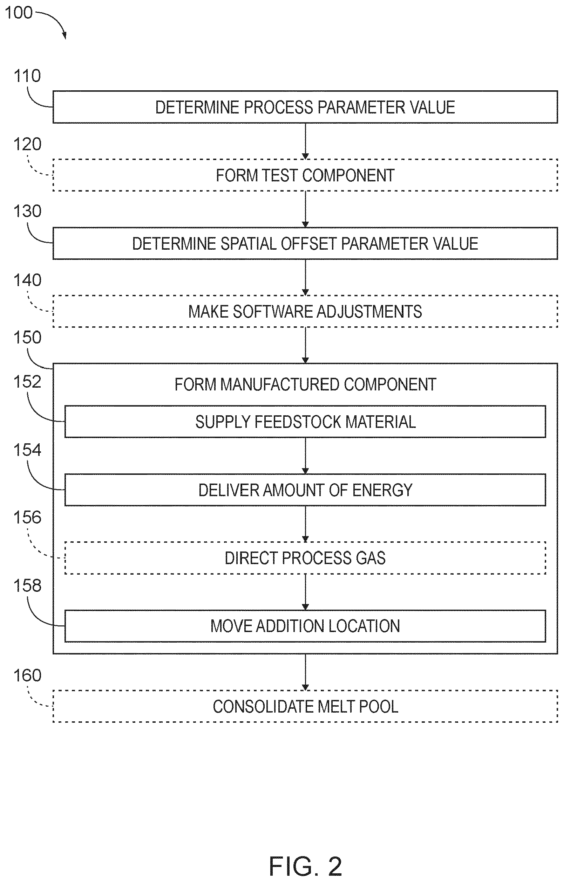

As an example, and as discussed in more detail herein with reference to methods 100 and/or Figs. 2-4, each consolidated material track 72 may extend between a corresponding initiation location 74 and a corresponding termination location 76. As also discussed in more detail herein, additive manufacturing system 10 may determine a spatial offset parameter 64 and may utilize the spatial offset parameter to vary a location of initiation location 74, a location of termination location 76, and/or a distance between initiation location 74 and termination location 76. Such a configuration may decrease the surface roughness of manufactured component 90.

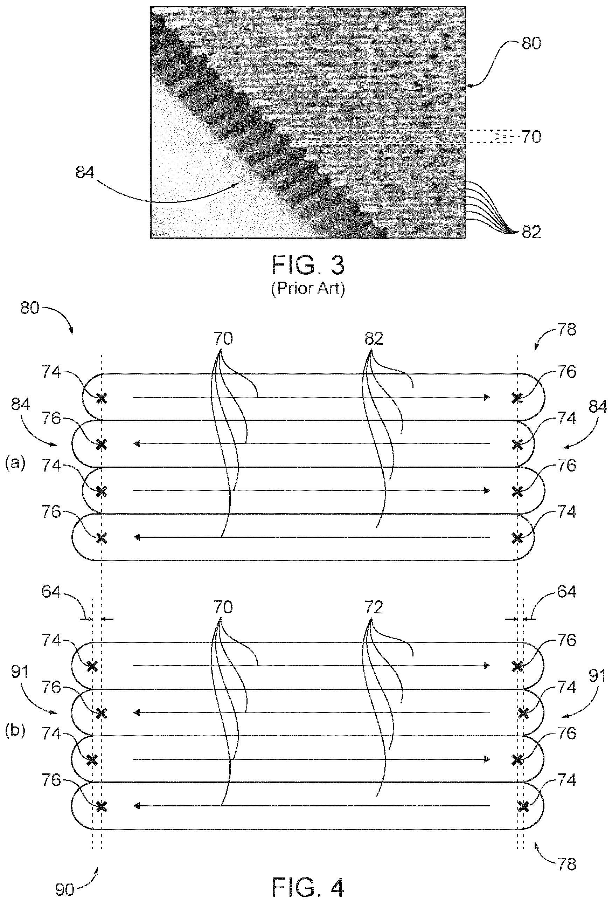

As an example, Figs. 3 and 4(a) illustrate a conventional manufactured component 80 formed utilizing a conventional additive manufacturing system. As illustrated in Fig. 4(a), initiation locations 74 and termination locations 76 may be aligned with one another within conventional manufactured component 80. However, because of non-uniformities caused by initiation and/or termination of the formation of conventional consolidated material tracks 82, conventional manufactured component 80 may have and/or define a relatively rough surface 84. In contrast, and as illustrated in Fig. 4(b), additive manufacturing systems 10 and/or methods 100, according to the present disclosure, may utilize spatial offset parameter 64 to adjust the location of initiation location 74, the location of termination location 76, and/or the distance between initiation location 74 and termination location 76. This may decrease the surface roughness of a surface 91 of manufactured component 90 when compared to surface 84 of conventional manufactured component 80, as illustrated by the comparison between Figs. 4(a) and 4(b).

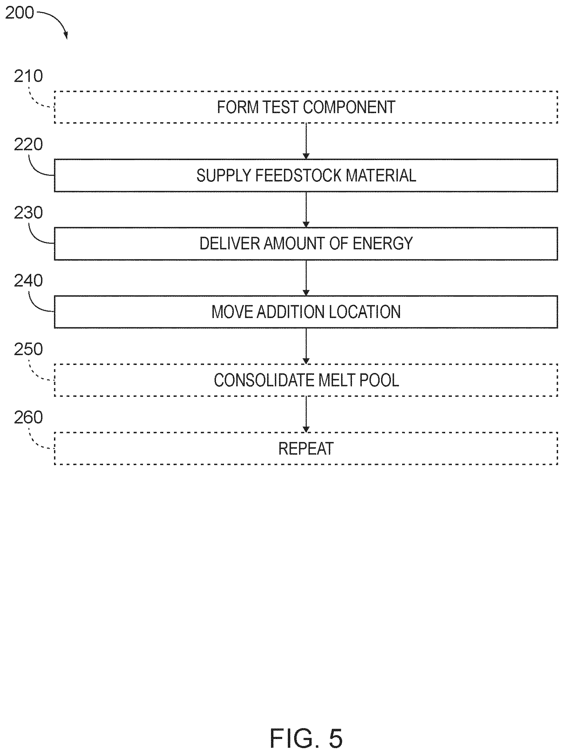

As another example, and as discussed in more detail herein with reference to methods 200 and/or Figs. 5-11, additive manufacturing systems 10 may be configured to selectively vary amount of energy 42 as a function of position along scan paths 70. Such a configuration may be utilized to increase a uniformity, or a transverse cross-sectional uniformity, of individual consolidated material tracks 72 and/or may be utilized to increase a uniformity of a consolidated material layer 78 that is defined by a plurality of consolidated material tracks 72 when compared to conventional additive manufacturing systems.

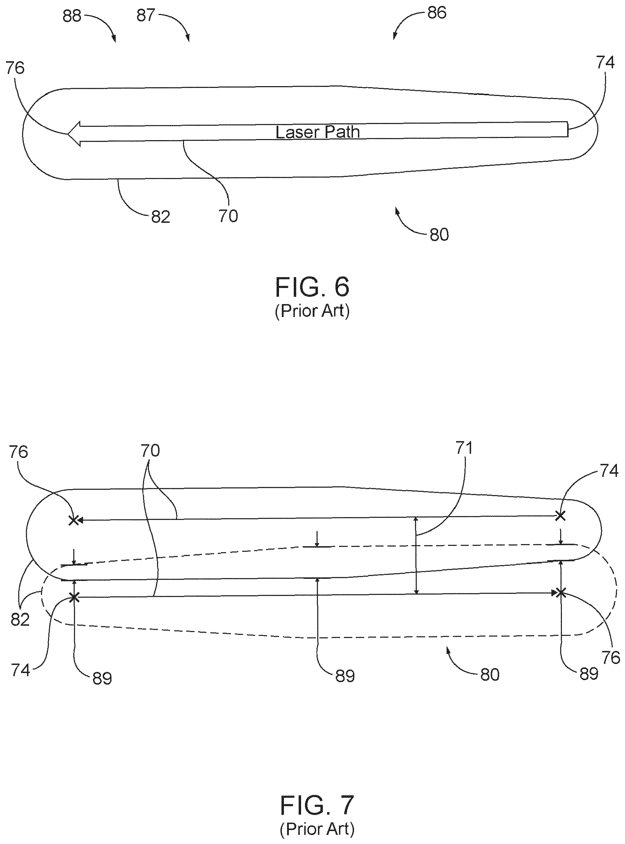

As an example, Figs. 6-8 illustrate conventional consolidated material tracks 82 that may be defined along scan paths 70 that extend between corresponding initiation locations 74 and termination locations 76. As illustrated in Figs. 6-8, a transverse cross-sectional shape (i.e., taken transverse to scan paths 70) of conventional consolidated material tracks 82 may vary significantly along the length of conventional consolidated material tracks 82. As an example, and as illustrated in Fig. 6, the transverse cross-sectional shape may vary within an initiation region 86, which is relatively proximate initiation location 74, before becoming relatively constant within a termination region 88, which is relatively proximate termination location 76. Additionally or alternatively, and in some examples, the transverse cross-sectional shape may be relatively constant within initiation region 86 but may vary within termination region 88. Such a configuration may decrease an overall uniformity of conventional manufactured components 80 that include conventional consolidated material tracks 82. As an example, and as illustrated in Fig. 7, it may be desirable to maintain a specified and/or a minimum overlap distance 89 between adjacent conventional consolidated material tracks 82, and doing so may require significant variation in the actual overlap distance 89 at various locations along the length of conventional consolidated material tracks 82 and/or may require that a hatch distance 71, or pitch, between adjacent conventional consolidated material tracks 82 be adjusted to maintain minimum overlap distance 89.

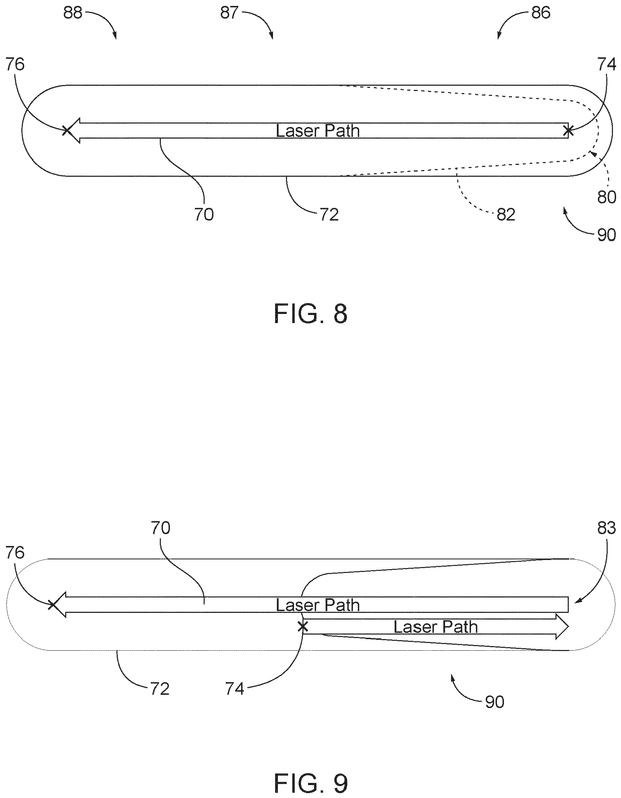

In contrast, and as illustrated in Figs. 8-10, additive manufacturing systems 10 and/or methods 200 may selectively vary the amount of energy 42 as a function of position along scan paths 70, thereby causing consolidated material tracks 72 to be more uniform along scan paths 70. This may increase an overall uniformity of manufactured components 90 when compared to conventional manufactured components 80. As an example, overlap distance 89 may be more uniform along the length of adjacent consolidated material tracks 72, which may increase the uniformity of manufactured components 90. This also may provide other benefits. As an example, the increase in uniformity of overlap distance 89 may permit and/or facilitate formation of manufactured components 90 utilizing a larger hatch distance 71 when compared to conventional consolidated material tracks 82 while maintaining the same minimum overlap distance 89, which may increase a speed at which manufactured components 90 may be formed when compared to conventional manufactured components 80.

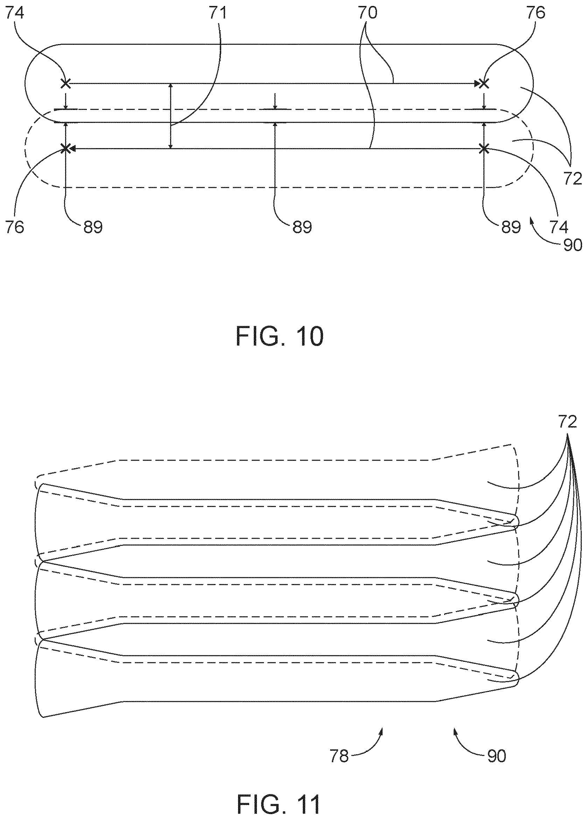

As discussed, additive manufacturing system 10 and/or methods 200 additionally or alternatively may selectively vary the amount of energy to increase a uniformity of a consolidated material layer 78 that is defined by a plurality of consolidated material tracks 72. This is illustrated in Fig. 11. As illustrated therein, the shape of a given consolidated material track 72 may be adjusted based upon a shape of an adjacent consolidated material track 72, thereby improving an overall uniformity of consolidated material layer 78.

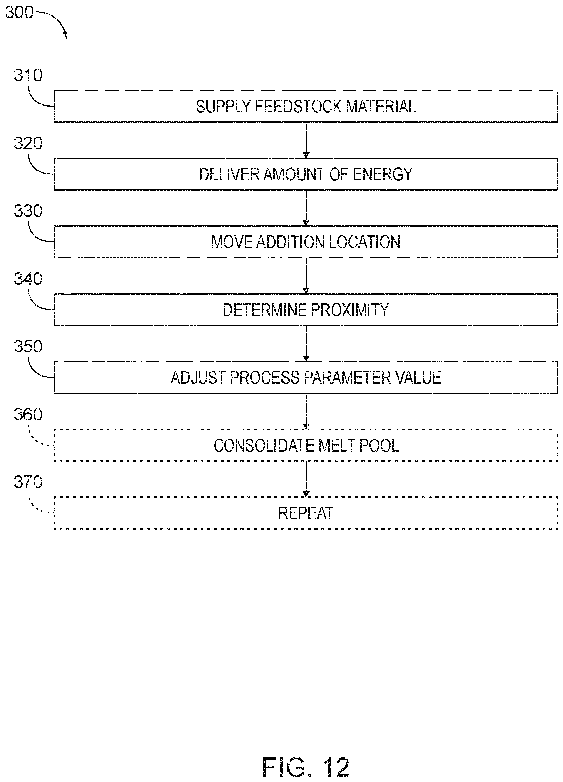

As yet another example, and as discussed in more detail herein with reference to methods 300 and/or Figs. 12-15, manufactured component 90 may include and/or define a merge region 96; and additive manufacturing system 10 may determine a proximity of melt pool 38 to merge region 96 and/or may adjust a process parameter of additive manufacturing system 10 based, at least in part, on the proximity of melt pool 38 to merge region 96. Such a configuration may facilitate improved merging of two or more distinct, or previously distinct, regions of manufactured component 90 within merge region 96, when compared to conventional additive manufacturing systems.

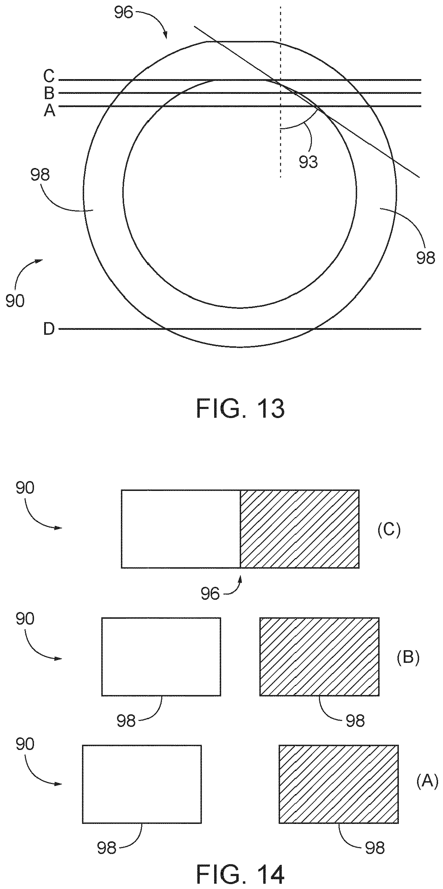

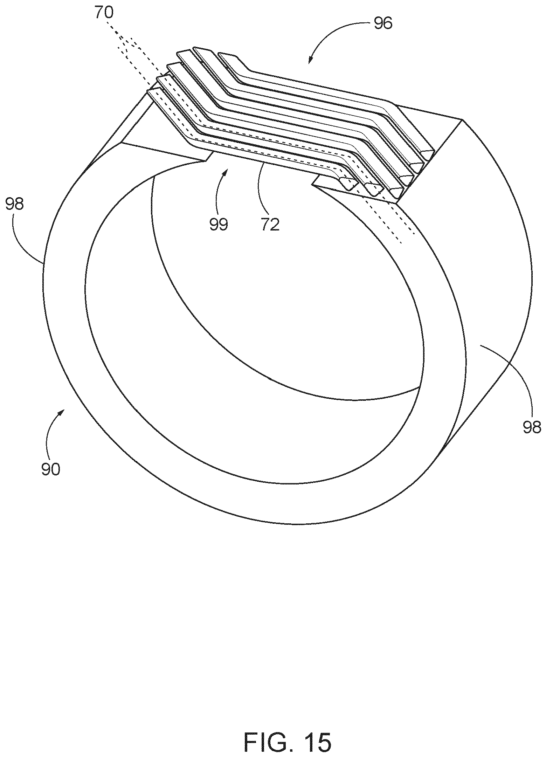

As an example, Fig. 13 illustrates a cross-section of a manufactured component 90 that separates into two separate regions 98 that merge together within merge region 96. As illustrated by the cross-sectional views of Fig. 14, which are taken along lines A, B, and C, respectively, of Fig. 13, the two separate regions 98 move closer and closer together before merging within merge region 96. Additive manufacturing systems 10 and/or methods 300 may be configured to determine when melt pool 38 is within a threshold proximity distance of merge region 96 and to adjust one or more process parameter values responsive thereto. Such a configuration may permit improved merging of the two separate regions 98 of manufactured component 90, such as via adjustment of the one or more process parameter values. As an example, adjustment of the process parameter value, in the form of amount of energy 42 supplied to melt pool 38, may provide compensation for differences in energy absorption by manufactured component 90 within and/or near merge region 96. As another example, and as illustrated in Fig. 15, adjustment of an orientation of scan paths 70 within and/or near merge region 96 may permit selection of an improved orientation for consolidated material tracks 72 that span between separate regions 98 of manufactured component 90.

Fig. 2 is a flowchart depicting examples of methods 100 of additively manufacturing a manufactured component utilizing an additive manufacturing system, according to the present disclosure. Methods 100 include determining a process parameter value at 110 and may include forming a test component at 120. Methods 100 also include determining a spatial offset parameter value at 130 and may include making software adjustments at 140. Methods 100 further include forming the manufactured component at 150. The forming at 150 includes supplying a feedstock material at 152, delivering an amount of energy at 154, and moving an addition location at 158, and the forming 150 may include directing a process gas at 156. Methods 100 further may include consolidating a melt pool at 160.

Determining the process parameter value at 110 may include determining any suitable process parameter value for the additive manufacturing system in any suitable manner. As examples, the determining at 110 may include setting, selecting, and/or establishing the process parameter value. As another example, the determining at 110 may include obtaining the process parameter value from a process parameter value database and/or from a process parameter value lookup table. As another example, the determining at 110 may include calculating the process parameter value, such as may be based, at least in part, on the feedstock material, a composition of the feedstock material, the manufactured component, and/or a shape of the manufactured component. An example of the process parameter value includes an energy application rate for the amount of energy. Additional examples of the process parameter value include an intensity, or power, of the amount of energy and/or a speed at which the addition location moves during the forming at 150.

Forming the test component at 120 may include forming the test component from the feedstock material and/or utilizing the additive manufacturing system. The test component may include one or more test structures that may provide information regarding operation of the additive manufacturing system, such as may be utilized during the determining at 130 and/or during the forming at 150. Additionally or alternatively, the forming at 120 may include forming the test component utilizing a variety of different, or stepped, values for one or more process parameters of the additive manufacturing system. Stated differently, the test component may permit and/or facilitate comparison of performance of the additive manufacturing system for the one or more process parameters and/or for combinations of the process parameters. Examples of the one or more process parameters include a print speed of the additive manufacturing system, a print power of the additive manufacturing system, an instantaneous print area of the additive manufacturing system, and/or a hatch distance, pitch, and/or spacing between adjacent consolidated material tracks formed utilizing the additive manufacturing system.

Determining the spatial offset parameter value at 130 may include determining the spatial offset parameter value for the additive manufacturing process. The spatial offset parameter value may be based, at least in part, on the process parameter value. As discussed in more detail herein, the spatial offset parameter value may be utilized, during the forming at 150, to adjust the forming at 150, thereby decreasing a surface roughness of the manufactured component.

The determining at 130 may be performed in any suitable manner. As an example, the determining at 130 may include calculating the spatial offset parameter value from the process parameter value. As a specific example, the calculating the spatial offset parameter value may include utilizing the process parameter value as an input to a spatial offset parameter model to calculate the spatial offset parameter value. In a more specific example, the process parameter value may include and/or be the energy application rate for the amount of energy delivered during the delivering at 154. As another more specific example, the calculating the spatial offset parameter value may include utilizing a feedstock material composition of the feedstock material as an input to the spatial offset parameter model. As yet another more specific example, the calculating the spatial offset parameter value may include utilizing a shape of the manufactured component as an input to the spatial offset parameter model. As another more specific example, the calculating the spatial offset parameter value may include utilizing a distance between adjacent consolidated material tracks of a plurality of adjacent consolidated material tracks, which are formed during the forming at 150, as an input to the spatial offset parameter model.

As additional examples, the calculating the spatial offset parameter value may include utilizing an input power of the amount of energy and/or a spot size of the amount of energy as inputs to the spatial offset parameter model. Stated differently, the calculating the spatial offset parameter value may include utilizing a rate at which the amount of energy is supplied to the melt pool, during the forming at 150, as an input to the spatial offset parameter model. The moving at 158 may include moving the addition location at a scan speed. In such an example, the calculating the spatial offset parameter and/or the rate at which the amount of energy is supplied to the melt pool may be based upon the scan speed. Stated differently, the scan speed may be utilized as an input to the spatial offset parameter model.

In some examples of methods 100, and during the forming at 150, the method further may include directing a process gas incident upon the feedstock material at 156. In such an example, the process gas may change and/or impact energy application to, energy absorption by, and/or energy dissipation from the melt pool. With this in mind, the calculating the spatial offset parameter additionally or alternatively may include utilizing a composition, a flow rate, and/or a thermal conductivity of the process gas as an input to the spatial offset parameter model.

When methods 100 include the forming at 120, the calculating the spatial offset parameter value additionally or alternatively may include determining at least one empirically determined parameter from the test component and/or utilizing the at least one empirically determined parameter as an input to the spatial offset parameter model. As discussed, the forming at 120 may include forming the test component with the additive manufacturing system, from the feedstock material, and/or under a variety of different process conditions. As such, the forming at 120 may permit and/or facilitate utilization of performance data for the additive manufacturing system during the determining at 130.

It is within the scope of the present disclosure that the determining at 130 may include determining a single spatial offset parameter value, which may be utilized during an entirety of the forming at 150. Alternatively, it is also within the scope of the present disclosure that the determining at 130 may include determining a plurality of spatial offset parameter values, with each spatial offset parameter value of the plurality of spatial offset parameter values being utilized to additively manufacture a corresponding and/or predetermined region of the manufactured component.

Making software adjustments at 140 may include making and/or performing any suitable software adjustment, such as to permit and/or to facilitate the forming at 150. As an example, and as discussed in more detail herein, the forming at 150 includes forming a plurality of consolidated material tracks, with each consolidated material track of the plurality of consolidated material tracks extending between a corresponding initiation location and a corresponding termination location. As also discussed in more detail herein, the forming at 150 includes forming such that a position of the initiation location and/or a position of the termination location is based, at least in part, on the spatial offset parameter.

This may be accomplished in any suitable manner. As an example, and prior to the forming at 150, the making at 140 may include providing a model of the manufactured component to a slicer algorithm of the additive manufacturing system. In such an example, the making at 140 also may include generating, with the slicer algorithm and based upon the model of the manufactured component, a slicer output. The slicer output may specify a location and an orientation of each consolidated material track. In some such examples, the generating the slicer output may include generating the slicer output based, at least in part, on the spatial offset parameter value. Stated differently, and in such examples, the slicer algorithm may be utilized to adjust the location and orientation of each consolidated material track, thereby adjusting the position of the initiation location and/or of the termination location, based upon the spatial offset parameter value.

In some examples, and subsequent to providing the model of the manufactured component to the slicer algorithm, the making at 140 may include providing the slicer output to an additive manufacturing machine-control algorithm of the additive manufacturing system. The additive manufacturing machine-control algorithm may be configured to direct the additive manufacturing system to perform the forming at 150 based, at least in part, on the slicer output. In some such examples, the additive manufacturing machine-control algorithm may be configured to direct the additive manufacturing system to adjust the slicer output based, at least in part, on the spatial offset parameter value, such as to produce and/or generate an adjusted slicer output. In some such examples, forming at 150 may be based, at least in part, on the adjusted slicer output. Stated differently, and in such examples, the additive manufacturing machine-control algorithm may be utilized to adjust the location and orientation of each consolidated material track, thereby adjusting the position of the initiation location and/or of the termination location, based upon the spatial offset parameter value.

Forming the manufactured component at 150 may include forming the manufactured component utilizing the additive manufacturing system. This may include operating the additive manufacturing system according to and/or utilizing the process parameter value. As discussed, the forming at 150 includes supplying the feedstock material at 152, delivering the amount of energy at 154, and moving the addition location at 158, and the forming 15 may further include directing the process gas at 156.

In some examples, the forming at 150 may include forming a plurality of parallel consolidated material tracks that at least partially defines the manufactured component. In some examples, the forming at 150 may include forming a plurality of consolidated material layers that at least partially defines the manufactured component. In such examples, each consolidated material layer of the plurality of consolidated material layers may include a corresponding subset of the plurality of consolidated material tracks and/or of the plurality of parallel consolidated material tracks.

The suppling at 152 includes supplying the feedstock material along a scan path of the additive manufacturing system. This may include supplying the feedstock material with, via, and/or utilizing a feedstock supply system. Examples of the feedstock material are disclosed herein with reference to feedstock material 32. Examples of the feedstock supply system are disclosed herein with reference to feedstock supply system 30.

The supplying at 152 may be accomplished in any suitable manner. As an example, the supplying at 152 may include supplying a powder feedstock material. Examples of the powder feedstock material include a metallic powder feedstock material, a polymeric powder feedstock material, and/or a composite powder feedstock material. As another example, the supplying at 152 may include supplying a feedstock material filament. Examples of the feedstock material filament include a wire, an electrically conductive filament, a metallic filament, a polymeric filament, and/or a composite filament.

In some examples, the supplying at 152 may include distributing a layer of the feedstock material, or of the powder feedstock material, on a surface, or on an exposed upper surface, of a previously formed portion of the manufactured component. In some such examples, the supplying at 152 may be performed prior to the delivering at 154. Stated differently, and in some such examples, the layer of the feedstock material may be distributed on the surface of the previously formed portion of the manufactured component prior to delivery of the amount of energy to the addition location.

In some examples, the supplying at 152 may be performed concurrently and/or cooperatively with the delivering at 154. In some such examples, the supplying at 152 may permit and/or facilitate the delivering at 154. Stated differently, and in some such examples, the delivering at 154 may include delivering the amount of energy in, within, and/or via the feedstock material. Additionally or alternatively, and in some such examples, the delivering at 154 may include delivering the amount of energy via an energy delivery mechanism that is separate and/or distinct from the feedstock material.

More specific examples of additive manufacturing processes that may be utilized with methods 100, 200, and/or 300 are discussed below. The described additive manufacturing processes are included herein as illustrative, non-exclusive examples of additive manufacturing processes, according to the present disclosure, and it is within the scope of the present disclosure that methods 100, 200, and/or 300 may be utilized to control other additive manufacturing processes in addition to and/or instead of those described herein.

An example of additive manufacturing processes that may utilize methods 100, 200, and/or 300 includes powder bed fusion processes, such as laser powder bed fusion and/or electron beam powder bed fusion. In such powder bed fusion processes, the feedstock material includes the powdered feedstock material, and the supplying at 152 includes distributing the layer of the powdered feedstock material on the surface of the previously formed portion of the manufactured component. This is performed prior to the delivering at 154. Also in such powder bed fusion processes, the addition location is defined on the surface of the previously formed portion of the manufactured component, and the delivering at 154 includes delivering the amount of energy to the addition location separately from distribution of the powdered feedstock material. As examples, the delivering at 154 may include delivering the amount of energy in the form of a laser beam that is directed incident upon the addition location and/or in the form of an electron beam that is directed incident upon the addition location.

Another example of additive manufacturing processes that may utilize methods 100, 200, and/or 300 include powder feed processes, such as powder feed directed energy deposition and/or other powder-based directed energy deposition processes. In such powder feed processes, the feedstock material includes the powdered feedstock material, and the supplying at 152 includes flowing the powdered feedstock material to the addition location as a feedstock material stream. This may be performed concurrently with the delivering at 154.

Yet other examples of additive manufacturing processes that may utilize methods 100, 200, and/or 300 include filament, or wire, feed processes, such as wire feed directed energy deposition, fused deposition modeling, wire arc additive manufacturing, and/or other filament-based directed energy deposition processes. In such filament feed processes, the feedstock material includes the feedstock material filament, the supplying at 152 includes conveying the feedstock material filament to the addition location, and/or the delivering at 154 may be performed concurrently with the supplying at 152. In some such filament feed processes, the delivering at 154 may include delivering the amount of energy via the feedstock material filament, such as by heating the feedstock material filament prior to delivery to the addition location and/or generating a voltage differential between the feedstock material filament and the addition location. Additionally or alternatively, and in some such filament feed processes, the delivering at 154 may include delivering the amount of energy via the energy delivery mechanism that is distinct from the feedstock material, such as by directing a laser, an electron beam, and/or an electric arc incident upon the addition location.

The delivering at 154 includes delivering the amount of energy from an energy source of the additive manufacturing system and/or to an addition location along the scan path. The amount of energy may be sufficient to form a melt pool of the feedstock material at the addition location. In some examples, the delivering at 154 may include delivering the amount of energy at an energy application rate, which may be based, at least in part, on the process parameter value. Examples of the energy source are disclosed herein with reference to energy source 40. Examples of the melt pool are disclosed herein with reference to melt pool 38. Examples of the amount of energy include an amount of electric energy, an amount of photon energy, an amount of electron beam energy, and/or an amount of heat. The amount of energy generally may be quantified in units of energy, such as Joules and/or electron volts.

The forming at 150 also may include directing a process gas, at 156, incident upon the feedstock material. The process gas may be utilized to shield the feedstock material from atmospheric air and/or from oxygen, such as during the delivering at 154. Stated differently, the process gas may be utilized to decrease a potential for reaction and/or oxidation of the feedstock material and/or of the melt pool during the forming at 150.

The forming at 150 further includes moving an addition location, at 158, along the scan path during the delivering at 154. This may include moving the addition location to move the melt pool along the scan path and/or to define the plurality of consolidated material tracks from the feedstock material. As discussed, each consolidated material track of the plurality of consolidated material tracks extends between a corresponding initiation location and a corresponding termination location. As also discussed, a position of the initiation location and/or of the termination location is based, at least in part, on the spatial offset parameter value, such as may be determined during the determining at 130. Stated differently, the moving at 158 may include moving the addition location between the initiation location and the termination location, which may be based, at least in part, on the spatial offset parameter value.

As an example, and during the forming at 150 and/or during the moving at 158, a position of the corresponding initiation location for each consolidated material track may be based, at least in part, on the spatial offset parameter value. As another example, and during the forming at 150 and/or during the moving at 158, a position of the corresponding termination location for each consolidated material track may be based, at least in part, on the spatial offset parameter value. As yet another example, and during the forming at 150 and/or during the moving at 158, a relative orientation between the corresponding termination location of a given consolidated material track of the plurality of consolidated material tracks and the corresponding initiation location of an adjacent consolidated material track of the plurality of consolidated material tracks may be based, at least in part, on the spatial offset parameter value. As discussed in more detail herein, such a configuration may decrease the surface roughness of the manufactured component when compared to manufactured components that are not formed utilizing methods 100. This is illustrated by comparing surface 84 of conventional manufactured component 80, which is illustrated in Fig. 4(a), to surface 91 of manufactured component 90, according to the present disclosure, that is illustrated in Fig. 4(b).

It is within the scope of the present disclosure that the scan path may be a linear, an at least partially linear, and/or an at least substantially linear scan path, such as is illustrated in Figs. 8 and 10. However, it is also within the scope of the present disclosure that the scan path may be nonlinear, may be arcuate, and/or may be segmented. As an example, and as illustrated in Fig. 9, scan path 70, which extends between initiation location 74 and termination location 76, may include a turn-around region 83. In such a configuration, initiation location 74 may be positioned between termination location 76 and turn-around region 83, as illustrated in Fig. 9. Alternatively, termination location 76 may be positioned between initiation location 74 and turn-around region 83. In such a configuration, a first scan path segment may extend between initiation location 74 and turn-around region 83 and a second scan path segment may extend between turn-around region 83 and termination location 76. The first scan path segment may be parallel, or at least substantially parallel, to the second scan path segment, the first scan path segment may be a linear, an at least partially linear, and/or an at least substantially linear first scan path segment, and/or the second scan path segment may be a linear, an at least partially linear, and/or an at least substantially linear second scan path segment. Such a configuration for scan path 70 may permit and/or facilitate an increase in uniformity of the consolidated material track and/or of the consolidated material layer via overlap between the first scan path segment and the second scan path segment.

Consolidating the melt pool at 160 may include solidifying the melt pool and/or consolidating the melt pool with the previously formed portion of the manufactured component. This may include consolidating to form and/or to define at least one consolidated material track, the plurality of consolidated material tracks, and/or an additional portion of the manufactured component. Stated differently, and upon consolidation of the melt pool, feedstock material, which is contained within the melt pool, may fuse to, may add to, and/or may become a portion of the previously formed portion of the manufactured component, thereby increasing a size and/or volume of the previously formed portion of the manufactured component.

The consolidating at 160 may be accomplished in any suitable manner. As an example, the consolidating at 160 may include cooling the melt pool to below a melting temperature of the feedstock material. As another example, the consolidating at 160 may include fusing the feedstock material, from the melt pool, to the previously formed portion of the manufactured component.

Fig. 5 is a flowchart depicting examples of methods 200 of additively manufacturing a manufactured component utilizing an additive manufacturing system, according to the present disclosure. Methods 200 may include forming a test component at 210 and include supplying a feedstock material at 220, delivering an amount of energy at 230, and/or moving an addition location at 240. Methods 200 also may include consolidating a melt pool at 250 and/or repeating at least a subset of methods 200 at 260.

Forming the test component at 210 may include forming the test component from the feedstock material and/or utilizing the additive manufacturing system. This may include performing the supplying at 220, the delivering at 230, and the moving at 240 for a plurality of preselected values of the amount of energy. The forming at 210 also may include analyzing the test component, such as to generate a consolidated material track correlation that describes at least one geometric property of a transverse cross-section of the consolidated material track for the plurality of preselected values of the amount of energy. Stated differently, the forming at 210 may permit and/or facilitate quantification of performance of the additive manufacturing system for the plurality of preselected and/or different values of the amount of energy, which may permit and/or facilitate determination of a correlation between the amount of energy and the at least one geometric property of the transverse cross-section of the consolidated material track. As discussed in more detail herein, this information may be utilized during the delivering at 230. Examples of the at least one geometric property of the transverse cross-section of the consolidated material track include a transverse cross-sectional area of the consolidated material track, a transverse width of the consolidated material track, a maximum transverse width of the consolidated material track, and/or a penetration depth of the consolidated material track into a previously formed portion of the manufactured component.

Supplying the feedstock material at 220 may include supplying the feedstock material along a scan path of the additive manufacturing system. The supplying at 220 may be at least substantially similar to the supplying at 152, which is discussed in more detail herein; and it is within the scope of the present disclosure that the supplying at 220 may include performing any suitable step and/or steps that are disclosed herein with reference to the supplying at 152.

Delivering the amount of energy at 230 may include delivering the amount of energy from an energy source of the additive manufacturing system and/or to an addition location along the scan path. The amount of energy may be sufficient to form a melt pool of the feedstock material at the addition location, and the delivering at 230 includes selectively varying the amount of energy as a function of position along the scan path. This may include selectively varying the amount of energy to increase a uniformity of the consolidated material track as a function of position along a length of the scan path. This is perhaps best illustrated in Fig. 8, where consolidated material track 72 exhibits increased uniformity along scan path 70 when compared to conventional consolidated material track 82. This increase in uniformity may be caused by the selective variation of the amount of energy along the scan path during the delivering at 230. Additionally or alternatively, the selectively varying may include selectively varying the amount of energy to increase a uniformity of a consolidated material layer that is partially defined by the consolidated material track. This is illustrated in Fig. 11, where a shape of a given consolidated material track 72 complements a shape of an adjacent consolidated material track 72, thereby increasing an overall uniformity of consolidated material layer 78 that includes consolidated material tracks 72.

As discussed, methods 200 may include forming a test component at 210. When methods 200 include the forming at 210, the selectively varying may include selectively varying the amount of energy based, at least in part, on the consolidated material track correlation generated during the forming at 210. Such a configuration may permit and/or facilitate an increase in the uniformity of the consolidated material track and/or of the consolidated material layer via empirical analysis and/or via empirical results obtained from the additive manufacturing system.

The selectively varying may be accomplished in any suitable manner. As examples, the selectively varying may include selectively varying an input power of the amount of energy, selectively varying a spot size of the amount of energy, and/or selectively varying a speed of motion of the addition location along the scan path during the moving at 240.

In some examples, the consolidated material track may extend between an initiation location and a termination location, examples of which are disclosed herein with reference to initiation location 74 and termination location 76, respectively. In such examples, the selectively varying the amount of energy may include selectively increasing the amount of energy as the melt pool moves from the initiation location to the termination location, monotonically increasing the amount of energy as the melt pool moves from the initiation location to the termination location, selectively decreasing the amount of energy as the melt pool moves from the initiation location to the termination location, and/or monotonically decreasing the amount of energy as the melt pool moves from the initiation location to the termination location.

In some examples, the consolidated material track may define an initiation region, which is proximate the initiation location, and a termination region, which is proximate the termination location. In some such examples, the consolidated material track also may define a steady-state region, which may extend between the initiation region and the termination region.

In such examples, the selectively varying the amount of energy may include selectively varying such that the amount of energy within the initiation region is greater than the amount of energy within the steady-state region. Additionally or alternatively, the selectively varying the amount of energy may include selectively varying such that the amount of energy within the initiation region is greater than the amount of energy within the termination region.

As an example, and without the selective variation of the amount of energy, melt pool size within the initiation region may be less than melt pool size within the steady-state region and/or within the termination region, such as may be caused by a lower overall temperature of the feedstock material prior to and/or upon initiation of the delivering at 230 when compared to after the delivering at 230 has been performed for a period of time. This is illustrated in Fig. 8, where the size of conventional consolidated material track 82 within initiation region 86 is less than the size of conventional consolidated material track 82 within steady-state region 87 and within termination region 88. In such examples, selectively varying such that the amount of energy within the initiation region is greater than the amount of energy within the steady-state region and/or within the termination region may increase melt pool size within the initiation region, thereby increasing overall uniformity of the consolidated material track, as illustrated by consolidated material track 72 of Fig. 8.

As another example, and without the selectively varying of the amount of energy, melt pool size within the initiation region may be greater than melt pool size within the steady-state region and/or within the termination region, such as may be caused by an overall shape and/or geometry of the manufactured component. In such examples, selectively varying such that the amount of energy within the initiation region is greater than the amount of energy within the steady-state region and/or within the termination region may permit adjacent consolidated material tracks to adjust for one another, thereby increasing an overall uniformity of the consolidated material layer that includes the consolidated material tracks, as illustrated in Fig. 11.

Additionally or alternatively, and in such examples, the selectively varying the amount of energy may include selectively varying such that the amount of energy within the initiation region is less than the amount of energy within the steady-state region. Additionally or alternatively, the selectively varying the amount of energy may include selectively varying such that the amount of energy within the initiation region is less than the amount of energy within the termination region.

As an example, and without the selective variation of the amount of energy, melt pool size within the initiation region may be greater than melt pool size within the steady-state region and/or within the termination region, such as may be caused by the overall shape and/or geometry of the manufactured component. In such examples, selectively varying such that the amount of energy within the initiation region is less than the amount of energy within the steady-state region and/or within the termination region may decrease melt pool size within the initiation region, thereby increasing overall uniformity of the consolidated material track.

As another example, and without the selectively varying of the amount of energy, melt pool size within the initiation region may be less than melt pool size within the steady-state region and/or within the termination region, such as may be caused by a lower overall temperature of the feedstock material prior to and/or upon initiation of the delivering at 230 when compared to after the delivering at 230 has been performed for a period of time. In such examples, selectively varying such that the amount of energy within the initiation region is less than the amount of energy within the steady-state region and/or within the termination region may permit adjacent consolidated material tracks to adjust for one another, thereby increasing an overall uniformity of the consolidated material layer that includes the consolidated material tracks.

As discussed, the selectively varying the amount of energy may include selectively varying the amount of energy to increase the uniformity of the consolidated material track relative and/or compared to a conventional consolidated material track, which may be formed via delivery of a constant amount of energy as a function of position along a conventional scan path. This may include increasing any suitable uniformity of the consolidated material track. As examples, the selectively varying the amount of energy may include selectively varying to increase a transverse cross-sectional uniformity of the consolidated material track as the function of position along the length of the scan path, to increase a transverse width uniformity of the consolidated material track as the function of position along the length of the scan path, to increase a transverse shape uniformity of the consolidated material track as the function of position along the length of the scan path, and/or to increase a transverse volume uniformity of the consolidated material track as the function of position along the length of the scan path.

It is within the scope of the present disclosure that the selectively varying the amount of energy may include adjusting and/or regulating the amount of energy in any suitable manner. As an example, the selectively varying the amount of energy may include utilizing at least one process parameter value for the additive manufacturing system as an input to an energy variation model. In such an example, the selectively varying also may include utilizing the energy variation model to predict a desired amount of energy as the function of position along the scan path that increases the uniformity of the consolidated material track, and the selectively varying the amount of energy further may include delivering the desired amount of energy as the function of position along the scan path. In such an example, methods 200 also may include operating the additive manufacturing system according to the process parameter value during the delivering the amount of energy and the moving the addition location. Examples of the process parameter value include an input power of the amount of energy, a spot size of the amount of energy, a speed of motion of the addition location along the scan path during the moving, a hatch distance of the scan path relative to an adjacent scan path, and/or a feedstock material composition of the feedstock material.

Additional examples of the delivering at 230 are disclosed herein with reference to the delivering at 154. It is within the scope of the present disclosure that the delivering at 230 may include performing any suitable step and/or steps that are disclosed herein with reference to the delivering at 154.

Moving the addition location at 240 may include moving the addition location during the delivering at 230. This may include moving the addition location along the scan path to move the melt pool along the scan path and/or to define a consolidated material track from the feedstock material. The moving at 240 may be at least substantially similar to the moving at 158, which is discussed in more detail herein; and it is within the scope of the present disclosure that the moving at 240 may include performing any suitable steps that are disclosed herein with reference to the moving at 158.

Consolidating the melt pool at 250 may include solidifying the melt pool and/or consolidating the melt pool with the previously formed portion of the manufactured component. The consolidating at 250 may be at least substantially similar to the consolidating at 160, which is discussed in more detail herein; and it is within the scope of the present disclosure that the consolidating at 250 may include performing any suitable step and/or steps that are disclosed herein with reference to the consolidating at 160.

Repeating at least the subset of methods 200 at 260 may include repeating any suitable step and/or steps of methods 200 in any suitable manner and/or for any suitable purpose. As an example, the repeating at 260 may include repeating the moving at 240 to form a plurality of consolidated material tracks from the feedstock material. In some examples, each consolidated material track of the plurality of consolidated material tracks may extend at least partially adjacent another consolidated material track of the plurality of consolidated material tracks such that the plurality of consolidated material tracks defines a corresponding overlap region between each consolidated material track and the other consolidated material track. In some such examples, a variation in a transverse width of the corresponding overlap region is less than a conventional transverse width of a conventional overlap region defined between adjacent conventional consolidated material tracks.

Fig. 12 is a flowchart depicting examples of methods 300 of additively manufacturing a manufactured component utilizing an additive manufacturing system, according to the present disclosure. Methods 300 include supplying a feedstock material at 310, delivering an amount of energy at 320, moving an addition location at 330, and determining a proximity at 340. Methods 300 also include adjusting a process parameter at 350 and may include consolidating a melt pool at 360 and/or repeating at least a subset of the methods at 370.

Supplying the feedstock material at 310 may include supplying the feedstock material along a scan path of the additive manufacturing system. The supplying at 310 may be at least substantially similar to the supplying at 152 and/or to the supplying at 220, which are discussed in more detail herein; and it is within the scope of the present disclosure that the supplying at 310 may include performing any suitable step and/or steps that are disclosed herein with reference to the supplying at 152 and/or the supplying at 220.

Delivering the amount of energy at 320 may include delivering the amount of energy from an energy source of the additive manufacturing system and/or to an addition location along the scan path. The amount of energy may be sufficient to form a melt pool of the feedstock material at the addition location. The delivering at 320 may be at least substantially similar to the delivering at 154 and/or to the delivering at 230, which are discussed in more detail herein, and it is within the scope of the present disclosure that the delivering at 320 may include performing any suitable step and/or steps that are disclosed herein with reference to the delivering at 154 and/or the delivering at 230.

Moving the addition location at 330 may include moving the addition location during the delivering at 320. This may include moving the addition location along the scan path to move the melt pool along the scan path and/or to define a consolidated material track from the feedstock material. The moving at 330 may be at least substantially similar to the moving at 158 and/or to the moving at 240, which are discussed in more detail herein; and it is within the scope of the present disclosure that the moving at 330 may include performing any suitable steps that are disclosed herein with reference to the moving at 158 and/or the moving at 240.

Determining the proximity at 340 may include determining that the melt pool is within a threshold proximity of a merge region of the manufactured component. As illustrated in Figs. 13-15, merge region 96 may include and/or be a region and/or portion of manufactured component 90 within which two separate regions, or portions, 98 of the manufactured component come together and/or merge. As an example, the merge region may be defined when, for a given depositional plane of the manufactured component, the two separate regions of the manufactured component are discontinuous and/or spaced-apart while, for a subsequent, or the next, depositional plane of the manufactured component, the two separate regions of the manufactured component are continuous and/or touching.

The determining at 340 may include determining that the melt pool is within the threshold proximity of the merge region in any suitable manner. As an example, the determining at 340 may include determining that a distance between the melt pool and the merge region is less than a threshold distance. As another example, methods 300 may include repeating the moving at 330 to define a consolidated material layer, which includes a corresponding plurality of consolidate material tracks, and the determining at 340 may include determining that at least one consolidated material track of the plurality of consolidated material tracks is less than the threshold distance from the merge region. Examples of the threshold distance include at least 0.01 millimeter (mm), at least 0.05 mm, at least 0.1 mm, at least 0.2 mm, at least 0.3 mm, at least 0.4 mm, at least 0.5 mm, at least 0.75 mm, at least 1 mm, at most 2 mm, at most 1.75 mm, at most 1.5 mm, at most 1.25 mm, at most 1 mm, at most 0.8 mm, at most 0.6 mm, at most 0.4 mm, at most 0.2 mm, at most 0.1 mm, and/or at most 0.05 mm.

As another example, the determining at 340 may include determining that the consolidated material layer that includes the melt pool is less than a threshold number of layers from the merge region. As an example, methods 300 may include repeating the moving at 330 to define a plurality of stacked consolidated material layers, and the determining at 340 may include determining that a given layer of the plurality of stacked consolidated material layers is within the threshold number of layers of the merge region. Examples of the threshold number of layers include at least 1, at least 2, at least 3, at least 4, at least 5, at most 10, at most 8, at most 6, at most 5, at most 4, at most 3, and/or at most 2 stacked consolidated material layers.

It is within the scope of the present disclosure that the threshold proximity may include and/or be any suitable threshold proximity. As an example, the threshold proximity may include and/or be a threshold approach proximity of the melt pool to the merge region. Stated differently, the determining at 340 may include determining that the melt pool is within the threshold proximity of the merge region as the melt pool approaches a location of an as yet unformed merge region and/or as the melt pool moves toward the merge region. As another example, the threshold proximity may be physically within the merge region itself. Stated differently, the determining at 340 may include determining that the melt pool is physically within the merge region. As another example, the threshold proximity may include and/or be a threshold departure proximity from the merge region. Stated differently, the determining at 340 may include determining that the melt pool is within the threshold proximity of the merge region after the merge region has been formed and/or as the melt pool moves away from the merge region.

In some examples, the determining at 340 may include determining that the melt pool is within the threshold proximity of the merge region when, or only when, a merge region angle of the merge region is within a threshold merge-region angle range. Stated differently, the adjusting at 350 may not be performed if and/or when the merge region angle is outside the threshold merge-region angle range, even though the melt pool may be within the threshold proximity of the merge region, as methods 300 may be incapable of reliably bridging a gap between the two separate regions. The merge region angle may be measured along a length of the gap and between a tangent to a surface of each separate region, which faces toward the gap, and a vertical plane. This is illustrated in Fig. 13 and indicated at 93. Examples of the threshold merge-region angle range include at least 5 degrees, at least 10 degrees, at least 15 degrees, at least 20 degrees, at most 30 degrees, at most 25 degrees, at most 20 degrees, and/or at most 15 degrees.

In some examples, the determining at 340 may include determining that the melt pool is within the threshold proximity of the merge region when, or only when, a characteristic dimension of the melt pool is less than a threshold characteristic dimension. Stated differently, the adjusting at 350 may not be performed if and/or when the characteristic dimension of the melt pool volume is greater than the threshold characteristic dimension, even though the melt pool may be within the threshold proximity of the merge region, as methods 300 may be incapable of reliably bridging a gap between the two separate regions. Examples of the characteristic dimension include a maximum dimension, a width, a diameter, and/or an effective diameter of the melt pool. Additional examples of the characteristic dimension include 1 mm, 2 mm, 3 mm, 5 mm, 7 mm, 10 mm, 15 mm, 20 mm, 25 mm, 30 mm, 40 mm, or 50 mm.

Adjusting the process parameter at 350 may be performed responsive to the determining at 340. The adjusting at 350 may include adjusting a process parameter value, or magnitude, of a process parameter of the additive manufacturing system. This may include adjusting the process parameter value from a process parameter pre-merge-region value to a process parameter merge-region value that differs from the process parameter pre-merge-region value. In some examples, the adjusting at 340 may include increasing the process parameter value. In some examples, the adjusting at 340 may include decreasing the process parameter value.

In some examples, the adjusting at 350 may include adjusting a magnitude of the amount of energy, adjusting a rate at which the amount of energy is absorbed by the melt pool, and/or adjusting a rate at which the amount of energy is delivered to the melt pool. Stated differently, and in some such examples, the adjusting at 350 may include adjusting the amount of energy delivered during the delivering at 320. This may be accomplished in any suitable manner. As examples, the adjusting at 350 may include adjusting an input power of the amount of energy, adjusting a shape and/or a spot size of the amount of energy incident upon the melt pool, and/or adjusting a speed of motion of the addition location along the scan path during the moving at 330.

In some examples, the adjusting at 350 may include adjusting, changing, and/or modifying the scan path. As examples, the adjusting at 350 may include adjusting a hatch distance of the scan path relative to an adjacent scan path, removing at least one scan path, adding at least one scan path, and/or adjusting a target overlap region dimension between the consolidated material track and an adjacent consolidated material track.

As additional examples, the adjusting at 350 may include modifying an orientation of the scan path and/or may be based upon an orientation of the scan path within the merge region. As an example, and as illustrated in Fig. 15, the additive manufacturing system might, by default, utilize scan paths 70 that extend at a skew angle relative to edges of separate regions 98 that define a gap 99 therebetween. However, methods 300 may determine that these scan paths extend within merge region 96 and/or across gap 99 and may adjust scan paths 70 to extend perpendicular to the edges and/or to take a shortest distance across gap 99, as illustrated in Fig. 15. Such a configuration may decrease a potential for sagging of consolidated material tracks 72 that extend across gap 99. Such a configuration also may increase a force, or a pressure force, that may be supported by consolidated material tracks 72 that extend across gap 99 subsequent to formation of manufactured component 90. Additionally or alternatively, such a configuration may decrease a potential for motion of separate regions 98 away from one another, due to the pressure force, subsequent to formation of manufactured component 90.

In some examples, the adjusting at 350 may include adjusting an angle of incidence between the amount of energy and the merge region, such as may be based upon a nominal angle of incidence between the amount of energy and the merge region. This may modify a penetration depth of the melt pool and/or may change a flow direction of the melt pool, thereby improving an ability of the melt pool to define the manufactured component within the merge region.

In some examples, the adjusting at 350 may include applying a process parameter value gradient within a transition region between a bulk deposition region and the merge region. Stated differently, the adjusting at 350 may include adjusting the process parameter value according to the process parameter value gradient as opposed to making a step change in the process parameter value. The process parameter value gradient may be determined in any suitable manner. As examples, the process parameter value gradient may be based, at least in part, on a width of the merge region, an overhang angle below the merge region, predetermined dimensional offsets from the merge region, a volume of already-deposited material below the merge region, and/or manufacturing capabilities of the additive manufacturing system, such as available powers, speeds, and/or turn radii.

In some examples, the adjusting at 350 may include adjusting the process parameter value based, at least in part, on the merge region angle of the merge region, examples of which are disclosed herein. As an example, the magnitude of the amount of energy, the spot size of the amount of energy, and/or the speed of motion during the moving at 330 may be adjusted based upon the merge region angle. As a more specific example, the adjusting at 350 may include adjusting to a relatively greater amount of energy when the merge region angle is small and/or when a significant amount of previously consolidated material extends below the merge region, as heat dissipation from the melt pool will be relatively larger. As another more specific example, the adjusting at 350 may include adjusting to a relatively lower amount of energy when the merge region angle is large and/or when the separate regions project relatively unsupported into the merge region, as heat dissipation from the melt pool will be relatively smaller.

In some examples, the adjusting at 350 may include adjusting the process parameter value based, at least in part, on a melt pool volume of the melt pool. As an example, relatively larger melt pools may be utilized and/or associated with relatively thicker separate regions, and relatively higher amounts of energy often may be applied to these relatively thicker separate regions without bending, bowing, and/or warping. In contrast, relatively smaller melt pools may be utilized and/or associated with relatively thinner separate regions, and relatively lower amounts of energy may need to be applied to these relatively thinner separate regions to avoid bending, bowing, and/or warping.

In some examples, the adjusting at 350 may include adjusting the process parameter value based, at least in part, on a finite element analysis of the manufactured component. Such a finite element analysis may, for example, be utilized to determine and/or to estimate rigidity of the separate regions, and the process parameter value may be adjusted based upon the rigidity of each separate region.

It is within the scope of the present disclosure that methods 300 and/or the adjusting at 350 may include performing one or more checks, or software checks. As an example, methods 300 may include determining that the merge region angle is less than the threshold merge region angle. When the merge region angle is less than the threshold merge region angle, it may be difficult for the additive manufacturing system to maintain separation between the two separate regions prior to the merge region. With this in mind, and, responsive to determining that the merge region angle is less than the threshold merge region angle, methods 300 further may include notifying an operator of the additive manufacturing system that the merge region angle is less than the threshold merge region angle. This may permit and/or facilitate modification of the manufactured component, or of a design for the manufactured component, by the operator.

As another example, methods 300 may include determining that the merge region begins on a layer border between the two separate regions. Once again, and in such a configuration, it may be difficult for the additive manufacturing system to maintain separation between the two separate regions prior to the merge region. With this in mind, and responsive to determining that the merge region begins on the layer border, methods 300 may include recommending, or automatically making, a shift in the location of the merge region. Additionally or alternatively, methods 300 may include recommending, or automatically applying, a minimum gap width constraint and merging the two separate regions when the gap width between the two separate regions is less than a minimum gap width.

Consolidating the melt pool at 360 may include solidifying the melt pool and/or consolidating the melt pool with the previously formed portion of the manufactured component. The consolidating at 360 may be at least substantially similar to the consolidating at 160 and/or to the consolidating at 250, which are discussed in more detail herein; and it is within the scope of the present disclosure that the consolidating at 360 may include performing any suitable step and/or steps that are disclosed herein with reference to the consolidating at 160 and/or the consolidating at 250.

Repeating at least the subset of the methods at 370 may include repeating any suitable step and/or steps of methods 300 in any suitable manner and/or for any suitable purpose. As an example, the repeating at 370 may include repeating the moving at 330 to define the merge region and the determining at 340 may include determining that the melt pool is within the threshold departure proximity of the merge region. Responsive to determining that the melt pool is within the threshold departure proximity of the merge region, the adjusting at 350 may include adjusting the process parameter value from the process parameter merge-region value to a process parameter post-merge-region value that differs from the process parameter merge-region value. As an example, and subsequent to formation of the merge region, it may be beneficial to adjust the amount of energy, the size of the melt pool, and/or the scan path to avoid the melt pool melting through the merge region. In some examples, the process parameter post-merge region value may be equal to the process parameter pre-merge-region value. In some examples, the process parameter post-merge region value may differ from the process parameter pre-merge-region value.

Methods 100, 200, and 300 are disclosed herein as separate and/or distinct methods that may be utilized to improve one or more characteristics of manufactured components formed therewith. It is within the scope of the present disclosure that methods 100, 200, and 300 may be utilized independent and/or separately from one another, such as when a given additive manufacture system 10 performs only one of methods 100, 200, and 300, at least at a given time and/or during manufacture of a given manufactured component. Alternatively, it is also within the scope of the present disclosure that two, or even all three, of methods 100, 200, and 300 may be utilized cooperatively and/or simultaneously by a given additive manufacturing system and/or during manufacturing of a given manufactured component.

Illustrative, non-exclusive examples of inventive subject matter according to the present disclosure are described in the following enumerated paragraphs, which information is also intended for aiding in understanding the background and advantages of the claimed invention:
A1. A method (100) of additively manufacturing a manufactured component (90) utilizing an additive manufacturing system (10), the method (100) comprising:
   determining (110) a process parameter value for the additive manufacturing system (10);
   determining (130), based at least in part upon the process parameter value, a spatial offset parameter value for the additive manufacturing system (10); and
   forming (150) the manufactured component (90) utilizing the additive manufacturing system (10) by operating the additive manufacturing system according to the process parameter value, wherein the forming (150) includes:
      (i) supplying (152) a feedstock material (32) along a scan path (70) of the additive manufacturing system (10);
      (ii) delivering (154), from an energy source (40) of the additive manufacturing system (10) and to an addition location (94) along the scan path (70), an amount of energy (42) sufficient to form a melt pool (38) of the feedstock material (32) at the addition location (94); and
      (iii) during the delivering (154) the amount of energy (42), moving (158) the addition location (94) along the scan path (70) to move the melt pool (38) along the scan path (70) and define a plurality of consolidated material tracks (72) from the feedstock material (32);
   wherein each consolidated material track (72) of the plurality of consolidated material tracks (72) extends between a corresponding initiation location (74) and a corresponding termination location (76); and
   wherein a location of at least one of the corresponding initiation location (74) and the corresponding termination location (76) is based, at least in part, on the spatial offset parameter value.
A2. The method (100) of paragraph A1, wherein the determining (110) the process parameter value includes setting, or establishing, the process parameter value.
A3. The method (100) of any of paragraphs A1-A2, wherein the determining (110) the process parameter value includes obtaining the process parameter value from at least one of a process parameter value database and a process parameter value lookup table.
A4. The method (100) of any of paragraphs A1-A3, wherein the determining (110) the process parameter value includes calculating the process parameter value.
A5. The method (100) of paragraph A4, wherein the calculating the process parameter value includes calculating the process parameter value based, at least in part, on at least one of the feedstock material (32) and a shape of the manufactured component.
A6. The method (100) of any of paragraphs A1-A5, wherein the delivering (154) the amount of energy (42) includes delivering the amount of energy (42) at an energy application rate, and further wherein the energy application rate is based, at least in part, on the process parameter value.
A7. The method (100) of any of paragraphs A1-A6, wherein the determining (130) the spatial offset parameter value includes calculating the spatial offset parameter value from the process parameter value.
A8. The method (100) of paragraph A7, wherein the calculating the spatial offset parameter value includes utilizing the process parameter value as an input to a spatial offset parameter model to calculate the spatial offset parameter value, optionally wherein the process parameter value includes an/the energy application rate for the amount of energy (42) during the delivering (154) the amount of energy (42).
A9. The method (100) of paragraph A8, wherein the calculating the spatial offset parameter value further includes utilizing a feedstock material composition of the feedstock material (32) as an input to the spatial offset parameter model.
A10. The method (100) of any of paragraphs A8-A9, wherein the calculating the spatial offset parameter value further includes utilizing a/the shape of the manufactured component as an input to the spatial offset parameter model.
A11. The method (100) of any of paragraphs A8-A10, wherein the calculating the spatial offset parameter value further includes utilizing a distance between adjacent consolidated material tracks (72) of the plurality of consolidate material tracks as an input to the spatial offset parameter model.
A12. The method (100) of any of paragraphs A8-A11, wherein the calculating the spatial offset parameter value includes at least one of:
   (i) utilizing an input power of the amount of energy (42) as an input to the spatial offset parameter model; and
   (ii) utilizing a spot size of the amount of energy (42) as an input to the spatial offset parameter model.
A13. The method (100) of any of paragraphs A8-A12, wherein the moving (158) the addition location (94) includes moving the addition location (94) at a scan speed, and further wherein the calculating the spatial offset parameter value includes utilizing the scan speed as an input to the spatial offset parameter model.
A14. The method (100) of any of paragraphs A8-A13, wherein, during the forming (150), the method (100) includes directing (156) a process gas incident upon the feedstock material (32), and further wherein the calculating the spatial offset parameter value includes at least one of:
   (i) utilizing a composition of the process gas as an input to the spatial offset parameter model;
   (ii) utilizing a flow rate of the process gas as an input to the spatial offset parameter model; and
   (iii) utilizing a thermal conductivity of the process gas as an input to the spatial offset parameter model.
A15. The method (100) of any of paragraphs A8-A14, wherein, prior to the determining (130) the spatial offset parameter value, the method (100) further includes forming (120) a test component from the feedstock material (32) and utilizing the additive manufacturing system (10), and further wherein the calculating the spatial offset parameter value includes determining at least one empirically determined parameter from the test component and utilizing the at least one empirically determined parameter as an input to the spatial offset parameter model.
A16. The method (100) of any of paragraphs A1-A15, wherein the determining (130) the spatial offset parameter value includes determining a single spatial offset parameter value that is utilized during an entirety of the forming (150) the manufactured component (90).
A17. The method (100) of any of paragraphs A1-A16, wherein the determining (130) the spatial offset parameter value includes determining a plurality of spatial offset parameter values, wherein each spatial offset parameter value of the plurality of spatial offset parameter values is utilized to additively manufacture a corresponding region of the manufactured component (90).
A18. The method (100) of any of paragraphs A1-A17, wherein the forming (150) the manufactured component (90) includes forming at least one of:
   (i) a plurality of parallel consolidated material tracks (72) that at least partially defines the manufactured component (90); and
   (ii) a plurality of consolidated material layers that at least partially defines the manufactured component (90), wherein each consolidated material layer of the plurality of consolidated material layers includes a corresponding subset of at least one of the plurality of consolidated material tracks (72) and the plurality of parallel consolidated material tracks (72).
A19. The method (100) of any of paragraphs A1-A18, wherein, during the forming (150) the manufactured component (90), a position of the corresponding initiation location (74) for each consolidated material track (72) is based, at least in part, on the spatial offset parameter value.
A20. The method (100) of any of paragraphs A1-A19, wherein, during the forming (150) the manufactured component (90), a position of the corresponding termination location (76) for each consolidated material track (72) is based, at least in part, on the spatial offset parameter value.
A21. The method (100) of any of paragraphs A1-A20, wherein, during the forming (150) the manufactured component (90), a relative orientation between the corresponding termination location (76) of a given consolidated material track (72) of the plurality of consolidated material tracks (72) and the corresponding initiation location (74) of an adjacent consolidated material track (72) of the plurality of consolidated material tracks (72) is based, at least in part, on the spatial offset parameter value.
A22. The method (100) of any of paragraphs A1-A21, wherein, prior to the forming (150) the manufactured component (90), the method (100) includes providing a model of the manufactured component (90) to a slicer algorithm of the additive manufacturing system (10), and generating with the slicer algorithm, and based, at least in part, on the model of the manufactured component (90), a slicer output that specifies a location and an orientation of each consolidated material track (72).
A23. The method (100) of paragraph A22, wherein the generating the slicer output further includes generating the slicer output based, at least in part, on the spatial offset parameter value.
A24. The method (100) of any of paragraphs A22-A23, wherein, subsequent to the providing the model of the manufactured component (90) to the slicer algorithm, the method (100) further includes providing the slicer output to an additive manufacturing machine-control algorithm of the additive manufacturing system (10), wherein the additive manufacturing machine-control algorithm is configured to direct the additive manufacturing system (10) to perform the forming (150) the manufactured component (90) based, at least in part, on the slicer output.
A25. The method (100) of paragraph A24, wherein the additive manufacturing machine-control algorithm further is configured to direct the additive manufacturing system (10) to adjust the slicer output based, at least in part, on the spatial offset parameter value to generate an adjusted slicer output and to perform the forming (150) the manufactured component (90) based, at least in part, on the adjusted slicer output.
B1. A method (200) of additively manufacturing a manufactured component (90) utilizing an additive manufacturing system (10), the method (200) comprising:
   supplying (220) a feedstock material (32) along a scan path (70) of the additive manufacturing system (10);
   delivering (230), from an energy source (40) of the additive manufacturing system (10) and to an addition location (94) along the scan path (70), an amount of energy (42) sufficient to form a melt pool (38) of the feedstock material (32) at the addition location (94); and
   during the delivering (230) the amount of energy (42), moving (240) the addition location (94) along the scan path (70) to move the melt pool (38) along the scan path (70) and define a consolidated material track (72) from the feedstock material (32);
   wherein the delivering (230) the amount of energy (42) includes selectively varying the amount of energy (42) as a function of position along the scan path (70) to at least one of:
      (i) increase a uniformity of the consolidated material track (72) as a function of position along a length of the scan path (70); and
      (ii) increase a uniformity of a consolidated material layer that is partially defined by the consolidated material track (72).
B2. The method (200) of paragraph B1, wherein the selectively varying the amount of energy (42) includes at least one of:
   (i) selectively varying an input power of the amount of energy (42);
   (ii) selectively varying a spot size of the amount of energy (42); and
   (iii) selectively varying a speed of motion of the addition location (94) along the scan path (70) during the moving (240).
B3. The method (200) of any of paragraphs B1-B2, wherein the method (200) further includes forming a test component, wherein the forming the test component includes performing the supplying (220) the feedstock material (32), the delivering (230) the amount of energy (42), and the moving (240) the addition location (94) for a plurality of preselected values of the amount of energy (42), wherein the method (200) includes analyzing the test component to generate a consolidated material track correlation that describes at least one geometric property of a transverse cross-section of the consolidated material track (72) for the plurality of preselected values of the amount of energy (42), and further wherein the selectively varying the amount of energy (42) includes selectively varying the amount of energy (42) based, at least in part, on the consolidated material track correlation.
B4. The method (200) of any of paragraphs B1-B3, wherein the consolidated material track (72) extends between an initiation location (74) and a termination location (76).
B5. The method (200) of paragraph B4, wherein the selectively varying the amount of energy (42) includes at least one of:
   (i) selectively increasing the amount of energy (42) as the melt pool (38) moves from the initiation location (74) to the termination location (76); and
   (ii) monotonically increasing the amount of energy (42) as the melt pool (38) moves from the initiation location (74) to the termination location (76).
B6. The method (200) of any of paragraphs B4-B5, wherein the selectively varying the amount of energy (42) includes at least one of:
   (i) selectively decreasing the amount of energy (42) as the melt pool (38) moves from the initiation location (74) to the termination location (76); and
   (ii) monotonically decreasing the amount of energy (42) as the melt pool (38) moves from the initiation location (74) to the termination location (76).
B7. The method (200) of any of paragraphs B4-B6, wherein the consolidated material track (72) defines an initiation region (86), which is proximate the initiation location (74), a termination region (88), which is proximate the termination location (76), and a steady-state region (87), which extends between the initiation region (86) and the termination region (88).
B8. The method (200) of paragraph B7, wherein the selectively varying the amount of energy (42) as the function of position includes selectively varying such that the amount of energy (42) within the initiation region (86) is at least one of:
   (i) greater than the amount of energy (42) within the steady-state region (87); and
   (ii) greater than the amount of energy (42) within the termination region (88).
B9. The method (200) of any of paragraphs B7-B8, wherein the selectively varying the amount of energy (42) as the function of position includes selectively varying such that the amount of energy (42) within the initiation region (86) is at least one of:
   (i) less than the amount of energy (42) within the steady-state region (87); and
   (ii) less than the amount of energy (42) within the termination region (88).
B10. The method (200) of any of paragraphs B7-B9, wherein the selectively varying the amount of energy (42) as the function of position includes selectively varying such that the amount of energy (42) within the termination region (88) is at least one of:
   (i) greater than the amount of energy (42) within the steady-state region (87); and
   (ii) greater than the amount of energy (42) within the initiation region (86).
B11. The method (200) of any of paragraphs B7-B10, wherein the selectively varying the amount of energy (42) as the function of position includes selectively varying such that the amount of energy (42) within the termination region (88) is at least one of:
   (i) less than the amount of energy (42) within the steady-state region (87); and
   (ii) less than the amount of energy (42) within the initiation region (86).
B12. The method (200) of any of paragraphs B1-B11, wherein the selectively varying the amount of energy (42) includes selectively varying the amount of energy (42) to increase the uniformity of the consolidated material track (72) relative to a conventional consolidated material track (82) formed via delivery of a constant amount of energy as a function of position along a conventional scan path.
B13. The method (200) of any of paragraphs B1-B12, wherein the selectively varying the amount of energy (42) includes selectively varying the amount of energy (42) to increase at least one of:
   (i) a transverse cross-sectional uniformity of the consolidated material track (72) as the function of position along the length of the scan path (70);
   (ii) a transverse width uniformity of the consolidated material track (72) as the function of position along the length of the scan path (70);
   (iii) a transverse shape uniformity of the consolidated material track (72) as the function of position along the length of the scan path (70); and
   (iv) a transverse volume uniformity of the consolidated material track (72) as the function of position along the length of the scan path (70).
B14. The method (200) of any of paragraphs B1-B13, wherein the selectively varying the amount of energy (42) includes utilizing at least one process parameter value for the additive manufacturing system (10) as an input to an energy variation model to predict a desired amount of energy as the function of position along the scan path (70) that increases the uniformity of the consolidated material track (72), wherein the selectively varying the amount of energy (42) further includes delivering the desired amount of energy as the function of position along the scan path, and further wherein the method (200) includes operating the additive manufacturing system (10) according to the process parameter value during the delivering (230) the amount of energy (42) and the moving (240) the addition location (94).
B15. The method (200) of paragraph B14, wherein the process parameter value includes at least one of:
   (i) a/the input power of the amount of energy (42);
   (ii) a/the spot size of the amount of energy (42);
   (iii) a/the speed of motion of the addition location (94) along the scan path (70) during the moving (240);
   (iv) a hatch distance (71) of the scan path (70) relative to an adjacent scan path (70); and
   (v) a feedstock material composition of the feedstock material (32).
B16. The method (200) of any of paragraphs B1-B15, wherein the method (200) further includes repeating (260) the moving (240) to form a plurality of consolidated material tracks (72) from the feedstock material (32).
B17. The method (200 of paragraph B16, wherein each consolidated material track (72) of the plurality of consolidated material tracks (72) extends at least partially adjacent another consolidated material track (72) of the plurality of consolidated material tracks (72) such that the plurality of consolidated material tracks (72) defines a corresponding overlap region between each consolidated material track (72) and the other consolidated material track (72).
B18. The method (200) of paragraph B17, wherein a variation in a transverse width of the corresponding overlap region is less than a conventional transverse width of a conventional overlap region defined between adjacent conventional consolidated material tracks (82).
B19. The method (200) of any of paragraphs B17-B18, wherein the plurality of consolidated material tracks (72) defines a/the hatch distance (71) between adjacent consolidated material tracks (72) of the plurality of consolidated material tracks (72), and further wherein the hatch distance (71) is greater than a conventional hatch distance defined by a plurality of conventional consolidated material tracks (82).
B20. The method (200) of any of paragraphs B1-B19, wherein the scan path (70) is a linear, an at least partially linear, or an at least substantially linear, scan path (70).
B21. The method (200) of any of paragraphs B1-B20, wherein the scan path (70) extends between an/the initiation location (74) and an/the termination location (76), wherein the scan path (70) includes a turn-around region (83), and further wherein at least one of:
   (i) the initiation location (74) is positioned between the termination location (76) and the turn-around region (83); and
   (ii) the termination location (76) is positioned between the initiation location (74) and the turn-around region (83).
B22. The method (200) of paragraph B21, wherein a first scan path segment extends between the initiation location (74) and the turn-around region (83), wherein a second scan path segment extends between the turn-around region (83) and the termination location (76).
B23. The method (200) of paragraph B22, wherein the first scan path segment is parallel, or at least substantially parallel, to the second scan path segment.
B24. The method (200) of any of paragraphs B22-B23, wherein the first scan path segment is a linear, an at least partially linear, or an at least substantially linear first scan path segment.
B25. The method (200) of any of paragraphs B22-B24, wherein the second scan path segment is a linear, an at least partially linear, or an at least substantially linear second scan path segment.
B26. The method (200) of any of paragraphs B1-B25, wherein the method (200) further includes performing any suitable method, step, and/or function of any of the methods (100) of any of paragraphs A1-A25.
C1. A method (300) of additively manufacturing a manufactured component (90) utilizing an additive manufacturing system (10), the method (300) comprising:
   supplying (310) a feedstock material (32) along a scan path (70) of the additive manufacturing system (10);
   delivering (320), from an energy source (40) of the additive manufacturing system (10) and to an addition location (94) along the scan path (70), an amount of energy (42) sufficient to form a melt pool (38) of the feedstock material (32) at the addition location (94);
   during the delivering (320) the amount of energy (42), moving (330) the addition location (94) along the scan path (70) to move the melt pool (38) along the scan path (70) and define a consolidated material track (72) from the feedstock material (32);
   determining (340) that the melt pool (38) is within a threshold proximity of a merge region (96) of the manufactured component (90); and
   responsive to the determining (340) that the melt pool (38) is within the threshold proximity of the merge region (96), adjusting (350) a process parameter value of the additive manufacturing system (10) from a process parameter pre-merge-region value to a process parameter merge-region value that differs from the process parameter pre-merge-region value.
C2. The method (300) of paragraph C1, wherein the determining (340) includes determining that a distance between the melt pool (38) and the merge region (96) is less than a threshold distance.
C3. The method (300) of any of paragraphs C1-C2, wherein the method (300) includes repeating (370) the moving (330) to define a consolidated material layer that includes a corresponding plurality of consolidated material tracks (72).
C4. The method (300) of paragraph C3, wherein the determining (340) includes determining that at least one consolidated material track (72) of the plurality of consolidated material tracks (72) is less than a/the threshold distance from the merge region (96).
C5. The method (300) of paragraph C4, wherein the threshold distance is at least one of:
   (i) at least 0.01 millimeter (mm), at least 0.05 mm, at least 0.1 mm, at least 0.2 mm, at least 0.3 mm, at least 0.4 mm, at least 0.5 mm, at least 0.75 mm, or at least 1 mm; and
   (ii) at most 2 mm, at most 1.75 mm, at most 1.5 mm, at most 1.25 mm, at most 1 mm, at most 0.8 mm, at most 0.6 mm, at most 0.4 mm, at most 0.2 mm, at most 0.1 mm, or at most 0.05 mm.
C6. The method (300) of any of paragraphs C4-C5, wherein the method (300) further includes repeating (370) the moving (330) to define a plurality of stacked consolidated material layers.
C7. The method (300) of paragraph C6, wherein the determining (340) includes determining that a given layer of the plurality of stacked consolidated material layers is within a threshold number of layers of the merge region (96).
C8. The method (300) of paragraph C7, wherein the threshold number of layers of the merge region (96) is at least one of:
   (i) at least 1, at least 2, at least 3, at least 4, or at least 5 stacked consolidated material layers; and
   (ii) at most 10, at most 8, at most 6, at most 5, at most 4, at most 3, or at most 2 stacked consolidated material layers.
C9. The method (300) of any of paragraphs C1-C8, wherein the determining (340) includes determining that the melt pool (38) is within the threshold proximity of the merge region (96) when a merge region angle (93) of the merge region (96) is within a threshold merge-region angle range, optionally wherein the threshold merge region angle range is at least one of:
   (i) at least 5 degrees, at least 10 degrees, at least 15 degrees, or at least 20 degrees; and
   (ii) at most 30 degrees, at most 25 degrees, at most 20 degrees, or at most 15 degrees.
C10. The method (300) of any of paragraphs C1-C9, wherein the determining (340) includes determining that the melt pool (38) is within the threshold proximity of the merge region (96) when a characteristic dimension of the melt pool (38) is less than a threshold characteristic dimension.
C11. The method (300) of any of paragraphs C1-C10, wherein the adjusting (350) the process parameter value includes increasing the process parameter value.
C12. The method (300) of any of paragraphs C1-C10, wherein the adjusting (350) the process parameter value includes decreasing the process parameter value.
C13. The method (300) of any of paragraphs C1-C12, wherein the adjusting (350) the process parameter value includes adjusting a magnitude of the amount of energy (42).
C14. The method (300) of any of paragraphs C1-C13, wherein the adjusting (350) the process parameter value includes adjusting an input power of the amount of energy (42).
C15. The method (300) of any of paragraphs C1-C14, wherein the adjusting (350) the process parameter value includes adjusting a spot size of the amount of energy (42).
C16. The method (300) of any of paragraphs C1-C15, wherein the adjusting (350) the process parameter value includes adjusting a speed of motion of the addition location (94) along the scan path (70) during the moving (330).
C17. The method (300) of any of paragraphs C1-C16, wherein the adjusting (350) the process parameter value includes adjusting a hatch distance (71) of the scan path (70) relative to an adjacent scan path (70).
C18. The method (300) of any of paragraphs C1-C17, wherein the adjusting (350) the process parameter value includes adjusting a target overlap region dimension between the consolidated material track (72) and an adjacent consolidated material track (72).
C19. The method (300) of any of paragraphs C1-C18, wherein the adjusting (350) the process parameter value includes adjusting an angle of incidence between the amount of energy (42) and the merge region (96).
C20. The method (300) of any of paragraphs C1-C19, wherein the adjusting (350) the process parameter value includes applying a process parameter value gradient within a transition region between a bulk deposition region and the merge region (96).
C21. The method (300) of any of paragraphs C1-C20, wherein the adjusting (350) the process parameter value includes adjusting based, at least in part, on a/the merge region angle (93) of the merge region (96).
C22. The method (300) of any of paragraphs C1-C21, wherein the adjusting (350) the process parameter value includes adjusting based, at least in part, on a/the melt pool volume of the melt pool (38).
C23. The method (300) of any of paragraphs C1-C22, wherein the adjusting (350) the process parameter value includes adjusting based, at least in part, on a finite element analysis of the manufactured component (90).
C24. The method (300) of any of paragraphs C1-C23, wherein the adjusting (350) the process parameter value includes adjusting an orientation of the scan path (70) within the merge region (96).
C25. The method (300) of any of paragraphs C1-C24, wherein the method (300 further includes determining that a/the merge region angle (93) of the merge region (96) is less than a threshold merge region angle and notifying an operator of the additive manufacturing system (10) that the merge region angle (93) is less than the threshold merge region angle.
C26. The method (300) of any of paragraphs C1-C25, wherein the method (300) further includes determining that the merge region (96) begins on a layer border and adjusting a location of the merge region (96) such that the merge region (96) is spaced-apart from the layer border.
C27. The method (300) of any of paragraphs C1-C26, wherein the threshold proximity is a threshold approach proximity.
C28. The method (300) of any of paragraphs C1-C27, wherein the method (300) further includes repeating (370) the moving (330) to define the merge region (96) and determining (340) that the melt pool (38) is within a threshold departure proximity of the merge region (96), wherein, responsive to determining (340) that the melt pool (38) is within the threshold departure proximity of the merge region (96), the method (300) further includes adjusting (350) the process parameter value of the additive manufacturing system (10) from the process parameter merge-region value to a process parameter post-merge-region value that differs from the process parameter merge-region value.
C29. The method (300) of paragraph C28, wherein the process parameter post-merge-region value is equal to the process parameter pre-merge-region value.
C30. The method (300) of paragraph C28, wherein the process parameter post-merge-region value differs from the process parameter pre-merge-region value.
C31. The method (300) of any of paragraphs C1-C30, wherein the method (300) further includes performing any suitable method, step, and/or function of any of the methods (100, 200) of any of paragraphs A1-B26.
D1. The method (100, 200, 300) of any of paragraphs A1-C30, wherein the additive manufacturing system (10) includes at least one of:
   (i) a powder bed fusion additive manufacturing system;
   (ii) a laser powder bed fusion additive manufacturing system;
   (iii) an electron beam powder bed fusion additive manufacturing system;
   (iv) a directed energy deposition additive manufacturing system;
   (v) a powder feed directed energy deposition additive manufacturing system;
   (vi) a wire feed directed energy deposition additive manufacturing system; and
   (vii) Joule printing.
D2. The method (100, 200, 300) of any of paragraphs A1-D1, wherein the supplying (152, 220, 310) the feedstock material (32) includes supplying a powder feedstock material.
D3. The method (100, 200, 300) of paragraph D2, wherein the powder feedstock material includes at least one of a metallic powder feedstock material, a polymeric powder feedstock material, and a composite powder feedstock material.
D4. The method (100, 200, 300) of any of paragraphs D2-D3, wherein the supplying (152, 220, 310) the feedstock material (32) includes distributing a layer of the feedstock material (32), optionally on a surface (91), or an exposed upper surface, of a previously formed portion (92) of the manufactured component (90).
D5. The method (100, 200, 300) of paragraph D4, wherein the addition location (94) is defined on the surface (91) of the previously formed portion (92) of the manufactured component (90).
D6. The method (100, 200, 300) of any of paragraphs D4-D5, wherein the distributing the layer of the powder feedstock material is performed prior to the delivering (154, 230, 320) the amount of energy (42).
D7. The method (100, 200, 300) of paragraph D2, wherein the supplying (152, 220, 310) the feedstock material (32) includes flowing the feedstock material (32) to the addition location (94) as a feedstock material stream.
D8. The method (100, 200, 300) of paragraph D7, wherein the delivering (154, 230, 320) the amount of energy (42) includes delivering the amount of energy (42) concurrently with the flowing the feedstock material.
D9. The method (100, 200, 300) of paragraph D1, wherein the supplying (152, 220, 310) the feedstock material (32) includes supplying a feedstock material filament.
D10. The method (100, 200, 300) of paragraph D9, wherein the feedstock material filament includes at least one of a wire, an electrically conductive filament, a metallic filament, a polymeric filament, and a composite filament.
D11. The method (100, 200, 300) of any of paragraphs D9-D10, wherein the supplying (152, 220, 310) the feedstock material (32) includes conveying the feedstock material filament to the addition location (94).
D12. The method (100, 200, 300) of paragraph D11, wherein the delivering (154, 230, 320) the amount of energy (42) includes at least one of:
   (i) delivering the amount of energy (42) via the feedstock material filament; and
   (ii) delivering the amount of energy (42) concurrently with the conveying the feedstock material filament.
D13. The method (100, 200, 300) of any of paragraphs D9-D12, wherein the delivering (154, 230, 320) the amount of energy (42) includes delivering the amount of energy (42) via an energy delivery mechanism (41), which is distinct from the feedstock material (32).
D14. The method (100, 200, 300) of any of paragraphs A1-D13, wherein the energy source (40) includes at least one of:
   (i) an electrical power source;
   (ii) a source of electromagnetic radiation;
   (iii) a laser beam source;
   (iv) an electron beam source; and
   (v) a heat source.
D15. The method of any of paragraphs A1-D14, wherein the amount of energy includes at least one of:
   (i) an amount of electric energy;
   (ii) an amount of photon energy;
   (iii) an amount of electron beam energy; and
   (iv) an amount of heat.
D16. The method (100, 200, 300) of any of paragraphs A1-D5, wherein the method (100, 200, 300) further includes consolidating (160, 250, 360) the melt pool (38) to define at least one consolidated material track (72) and a/the plurality of consolidated material tracks (72) from the feedstock material (32).
D17. The method (100, 200, 300) of paragraph D16, wherein the consolidating (160, 250, 360) the melt pool (38) includes cooling the melt pool (38) to below a melting temperature of the feedstock material (32).
D18. The method (100, 200, 300) of any of paragraphs D16-D17, wherein the consolidating (160, 250, 360) the melt pool (38) includes solidifying the melt pool (38).
D19. The method (100, 200, 300) of any of paragraphs D16-D18, wherein the consolidating (160, 250, 360) the melt pool (38) includes fusing the feedstock material (32), from the melt pool (38), to a/the previously formed portion (92) of the manufactured component (90).
E1. An additive manufacturing system (10) for additively manufacturing a manufactured component (90), the additive manufacturing system (10) comprising:
   a support platform (20) configured to support the manufactured component (90) during additive manufacture of the manufactured component (90);
   a feedstock supply system (30) configured to supply a feedstock material (32) to an addition location (94) of the manufactured component (90);
   an energy source (40) configured to deliver an amount of energy (42) to the addition location (94); and
   a controller (60) programmed to control the operation of the additive manufacturing system (10) according to the method (100, 200, 300) of any of paragraphs A1-D19.
E2. The additive manufacturing system (10) of paragraph E1, wherein the feedstock supply system (30) includes at least one of:
   (i) a powder supply system (34) configured to supply the feedstock material (32) in the form of a feedstock material powder; and
   (ii) a filament supply system (36) configured to supply the feedstock material (32) in the form of a feedstock material filament.
E3. The additive manufacturing system (10) of any of paragraphs E1-E2, wherein the energy source (40) includes at least one of:
   (i) an electrical power source;
   (ii) a source of electromagnetic radiation;
   (iii) a laser beam source;
   (iv) an electron beam source; and
   (v) a heat source.
F1. Non-transitory computer readable storage media (62) including computer-executable instructions that, when executed, direct an additive manufacturing system (10) to perform the method (100, 200, 300) of any of paragraphs A1-D19.

As used herein, the terms "selective" and "selectively," when modifying an action, movement, configuration, or other activity of one or more components or characteristics of an apparatus, mean that the specific action, movement, configuration, or other activity is a direct or indirect result of user manipulation of an aspect of, or one or more components of, the apparatus.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the phrase "at least one," in reference to a list of one or more entities should be understood to mean at least one entity selected from any one or more of the entity in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" may mean A alone, B alone, C alone, A and B together, A and C together, B and C together, A, B, and C together, and optionally any of the above in combination with at least one other entity.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

## Claims

1. A method (300) of additively manufacturing a manufactured component (90) utilizing an additive manufacturing system (10), the method (300) comprising:
supplying (310) a feedstock material (32) along a scan path (70) of the additive manufacturing system (10);
delivering (320), from an energy source (40) of the additive manufacturing system (10) and to an addition location (94) along the scan path (70), an amount of energy (42) sufficient to form a melt pool (38) of the feedstock material (32) at the addition location (94);
during the delivering (320) the amount of energy (42), moving (330) the addition location (94) along the scan path (70) to move the melt pool (38) along the scan path (70) and define a consolidated material track (72) from the feedstock material (32);
determining (340) that the melt pool (38) is within a threshold proximity of a merge region (96) of the manufactured component (90); and
responsive to the determining (340) that the melt pool (38) is within the threshold proximity of the merge region (96), adjusting (350) a process parameter value of the additive manufacturing system (10) from a process parameter pre-merge-region value to a process parameter merge-region value that differs from the process parameter pre-merge-region value.

2. The method (300) of claim 1, wherein the determining (340) includes determining that a distance between the melt pool (38) and the merge region (96) is less than a threshold distance.

3. The method (300) of claim 1 or 2, wherein the method (300) includes repeating (370) the moving (330) to define a consolidated material layer (78) that includes a corresponding plurality of consolidated material tracks (72).

4. The method (300) of claim 3, wherein the determining (340) includes determining that at least one consolidated material track (72) of the plurality of consolidated material tracks (72) is less than a threshold distance from the merge region (96).

5. The method (300) of claim 3 or 4, wherein the method (300) further includes repeating (370) the moving (330) to define a plurality of stacked consolidated material layers (78).

6. The method (300) of claim 5, wherein the determining (340) includes determining that a given layer of the plurality of stacked consolidated material layers (78) is within a threshold number of layers of the merge region (96).

7. The method (300) of any of claims 1-6, wherein the determining (340) includes determining that the melt pool (38) is within the threshold proximity of the merge region (96) when a merge region angle (93) of the merge region is within a threshold merge-region angle range; and or
wherein the determining (340) includes determining that the melt pool (38) is within the threshold proximity of the merge region (96) when a characteristic dimension of the melt pool (38) is less than a threshold characteristic dimension.

8. The method (300) of any of claims 1-7, wherein the adjusting (350) the process parameter value includes at least one of:
(i) adjusting a magnitude of the amount of energy (42);
(ii) adjusting an input power of the amount of energy (42);
(iii) adjusting a spot size of the amount of energy (42);
(iv) adjusting a speed of motion of the addition location (94) along the scan path (70) during the moving (330);
(v) adjusting a hatch distance (71) of the scan path (70) relative to an adjacent scan path (70);
(vi) adjusting a target overlap region dimension between the consolidated material track (72) and an adjacent consolidated material track (72); and
(vii) adjusting an angle of incidence between the amount of energy (42) and the merge region (96); and/or
wherein the adjusting (350) the process parameter value includes applying a process parameter value gradient within a transition region between a bulk deposition region and the merge region (96); and/or
wherein the adjusting (350) the process parameter value includes adjusting based, at least in part, on: a merge region angle (93) of the merge region (96); and/or on a melt pool volume of the melt pool (38); and/or on a finite element analysis of the manufactured component (90).

9. The method (300) of any of claims 1-8, wherein the adjusting (350) the process parameter value includes adjusting an orientation of the scan path (70) within the merge region (96).

10. The method (300) of any of claims 1-9, wherein the method (300) further includes determining that a merge region angle (93) of the merge region (96) is less than a threshold merge region angle and notifying an operator of the additive manufacturing system (10) that the merge region angle (93) is less than the threshold merge region angle.

11. The method (300) of any of claims 1-10, wherein the method (300) further includes determining that the merge region (96) begins on a layer border and adjusting a location of the merge region (96) such that the merge region (96) is spaced-apart from the layer border.

12. The method (300) of any of claims 1-11, wherein the threshold proximity is a threshold approach proximity.

13. The method (300) of any of claims 1-12, wherein the method (300) further includes repeating (370) the moving (330) to define the merge region (96) and determining (340) that the melt pool (38) is within a threshold departure proximity of the merge region (96), wherein, responsive to determining (340) that the melt pool (38) is within the threshold departure proximity of the merge region (96), the method (300) further includes adjusting (350) the process parameter value of the additive manufacturing system (10) from the process parameter merge-region value to a process parameter post-merge-region value that differs from the process parameter merge-region value.

14. An additive manufacturing system (10) for additively manufacturing a manufactured component (90), the additive manufacturing system (10) comprising:
a support platform (20) configured to support the manufactured component (90) during additive manufacturing of the manufactured component (90);
a feedstock supply system (30) configured to supply a feedstock material (32) to an addition location (94) of the manufactured component (90);
an energy source configured to deliver an amount of energy (42) to the addition location (94); and
a controller (60) programmed to control operation of the additive manufacturing system (10) according to the method (300) of any of claims 1-13.

15. Non-transitory computer readable storage media (62) including computer-executable instructions that, when executed, direct an additive manufacturing system (10) to perform the method (300) of any of claims 1-13.
